# EUROPÄISCHE PATENTSCHRIFT

(11) **EP 2 874 918 B1**
(45) Veröffentlichungstag und Bekanntmachung des Hinweises auf die Patenterteilung: **31.08.2016**
(21) Anmeldenummer: 13749998.4
(22) Anmeldetag: 17.07.2013
(51) Int. Cl.: B65G 9/00

(54) **HÄNGETASCHE ZUM TRANSPORT VON FÖRDERGUT**
SUSPENDED CONTAINER FOR TRANSPORTING GOODS
CONTENANT SUSPENDU POUR TRANSPORTER DES MATÉRIAUX

(30) Priorität: 17.07.2012 DE 102012212518; 21.12.2012 DE 202012012331 U
(43) Veröffentlichungstag der Anmeldung: 27.05.2015
(73) Patentinhaber: RSL Logistik GmbH & Co. KG, 86899 Landsberg (DE)
(72) Erfinder: SCHÖNENBERGER, Rolf, 86899 Landsberg/Lech (DE)
(74) Vertreter: Weickmann & Weickmann PartmbB
(86) Internationale Anmeldenummer: PCT/EP2013/065072
(87) Internationale Veröffentlichungsnummer: WO 2014/012965

(56) Entgegenhaltungen:
- EP-A1- 2 418 160
- DE-A1-102004 018 569

## Beschreibung

Diese Erfindung betrifft eine Hängetasche als Fördergutbehälter zum Transport von Fördergut in einer Hängefördereinrichtung, mit einer ersten Taschenseitenwand und einer zweiten Taschenseitenwand, die einander gegenüberliegend einen Fördergutaufnahmebereich zwischen sich begrenzen und in einem Klappverbindungsbereich so miteinander verbunden sind, dass sie zum Öffnen und Schließen des Fördergutaufnahmebereiches auseinanderklappbar und zusammenklappbar sind, so dass sie eine maulartige Taschenöffnung bilden, und mit einem Anhängmittel zum Anhängen der Hängetasche in einer Transportstellung mit oben liegender Taschenöffnung an eine Hängefördereinrichtung.

In automatisierten Warenlagern, Produktionsstätten und beim Warentransport ganz allgemein besteht der Bedarf, Fördergüter in schneller Handarbeit oder automatisiert in Fördergutbehälter aufzunehmen, die Fördergüter zum Beispiel über eine Hängefördereinrichtung mittels der Fördergutbehälter zu ihrem Bestimmungsort zu transportieren und dort wieder aus den Fördergutbehältern zu entladen. Dazu sind in der Vergangenheit diverse Fördergutbehälter und dazugehörige Hängefördereinrichtungen entwickelt und beschrieben worden, beispielsweise in der eine gattungsgemäße Hängetasche offenbarenden deutschen Offenlegungsschrift 10 2004 018 569 A1, der europäischen Patentanmeldung EP 2 130 968 A1 oder der europäischen Patentanmeldung EP 2 196 415 A2. Die dort beschriebenen Transporttaschen bestehen aus flexiblem Material in Form einer Schlaufe, in der das Fördergut gehalten wird. Zum Beladen werden die Transporttaschen oben geöffnet, um ein Fördergut in die Schlaufe einbringen zu können. Die Aufnahmeöffnung hat dabei nur eine begrenzte Größe. Zum Entladen des Fördergutes aus der Transporttasche kann dieses seitlich aus der Schlaufe entnommen oder ausgestoßen werden. Gemäß der EP 2 130 968 A1 kann die Schlaufe unten geöffnet werden, so dass das Fördergut nach unten aus der Transporttasche fallen kann.

Die beschriebenen Lösungen haben mehrere Nachteile. In der flexiblen Schlaufe liegen die Fördergüter immer unten. Bei Stößen, zum Beispiel bei der Übergabe der Transporttasche zwischen verschiedenen Transportsystemen, beim Überfahren von Unebenheiten in der Förderbahn oder dergleichen, werden diese unmittelbar auf das Fördergut übertragen. Das Fördergut kann dann leicht im Fördergutträger verrutschen und mehrere Fördergutartikel in einem Fördergutträger können dabei ggf. aneinanderstoßen, was die Beschädigungsgefahr vergrößert. Weiter ist die Größe für die Öffnung zur Aufnahme von Transportgütern begrenzt, so dass sie nur schwierig und vorsichtig in die Transporttasche eingebracht werden können und in der Regel vom oberen Einlass bis nach unten in die flexible Schlaufe fallen. Auch dies kann zu hoher Belastung der Fördergüter führen. Weiter ist durch die feste Größe der Öffnung die maximale Größe der zu transportierenden Fördergüter auf ein relativ kleines Maß begrenzt. Ferner können Transportgüter seitlich aus der Schlaufe fallen, was die Sicherheit der Fördergüter weiter beeinträchtigt. Nicht zuletzt werden insbesondere kleine Fördergüter von der Schlaufe nicht unbedingt sicher umschlossen, so dass diese besonders leicht aus der Schlaufe fallen können.

Aufgabe der Erfindung ist es daher, Hängetaschen, Hängefördereinrichtungen und Transportverfahren nach dem Stand der Technik durch einen Fördergutbehälter in Gestalt einer neuen Hängetasche zu verbessern, der die oben genannten Nachteile vermeidet und insbesondere gut beladbar ist sowie eine verminderte Stoßbelastung und verbesserte Sicherheit gegen Herausfallen von Fördergütern unterschiedlichster Größen gewährleisten kann.

Gegenstand der Erfindung ist ein Fördergutträger in Gestalt einer Hängetasche der eingangs genannten Art, wobei diese Hängetasche eine erste Hängetaschenseitenwand und eine zweite Hängetaschenseitenwand aufweist, die einander gegenüberliegend einen Fördergutaufnahmebereich zwischen sich begrenzen und in einem Klappverbindungsbereich so miteinander verbunden sind, dass sie zum Öffnen und Schließen des Fördergutaufnahmebereiches auseinanderklappbar und zusammenklappbar sind, so dass sie eine maulartige Taschenöffnung bilden, wobei ferner ein Anhängmittel zum Anhängen der Hängetasche in einer Transportstellung mit nach oben von dem Klappverbindungsbereich abstehenden Seitenwänden und somit oben liegender Taschenöffnung an eine Hängefördereinrichtung vorgesehen ist, und wobei die erste Taschenseitenwand zumindest einen starren Randkonturbereich aufweist und daran schwenkbeweglich um eine in der Transportstellung der Hängetasche zumindest annähernd horizontal verlaufende Schwenkachse mit dem Anhängmittel verbunden ist. Die Hängetasche nach der Erfindung ist dadurch gekennzeichnet, dass die zweite Taschenseitenwand an einer von der Schwenkachse und dem Klappverbindungsbereich entfernten Stelle mit dem Anhängmittel verbunden oder davon beaufschlagbar ist, derart, dass durch Schwenken der ersten Taschenseitenwand relativ zu dem Anhängmittel um die Schwenkachse die Taschenseitenwände auseinanderklappbar und zusammenklappbar sind.

Die Hängetasche ist so gestaltet, dass sie aus ihrer mit der Schließstellung einhergehenden Transportstellung heraus an einer Beladestation oder Entladestation ggf. unter Verbleib an der Hängefördereinrichtung zu öffnen ist, und zwar durch Verschwenken der ersten Taschenseitenwand aus ihrer nach oben gerichteten Stellung heraus um die vorzugsweise horizontale Schwenkachse. Dabei kann die erste Taschenseitenwand bis in eine zumindest annähernd horizontale Lage gebracht werden. Bei dieser Schwenkbewegung der ersten Taschenseitenwand kommt es automatisch zu einem Aufklappen der Hängetasche, da die zweite Taschenseitenwand von dem an einer Hängefördereinrichtung hängenden und nach oben gerichteten Anhängmittel so beaufschlagt ist, dass sie der Schwenkbewegung der ersten Taschenseitenwand nicht in einem relevanten Maße folgen kann.

Die Hängetasche nach der Erfindung kann so gestaltet sein, dass die Seitenwände in der Position maximaler Öffnung der Hängetasche z.B. unter einem Winkel von 90° zueinander ausgerichtet sind, wobei die erste Taschenseitenwand als z.B. horizontale Unterlage für die Beladung mit neuem Fördergut dienen kann. Eine so realisierte große Weite der Taschenöffnung ermöglicht ein erheblich vereinfachtes Beladen der Tasche auch mit größeren Fördergütern, sei es manuell oder automatisch. Ebenso ist auch ein Entnehmen von Fördergut aus der Fördertasche relativ leicht möglich.

Zum Entladen von Fördergut kann die erste Taschenseitenwand gemäß einer Variante der Erfindung auch so um die Schwenkachse verschwenkt werden, dass sie eine Neigung nach unten annimmt, um Fördergut aus der Hängetasche herausfallen oder herausrutschen zu lassen.

Ist beim Beladen der Hängetasche Fördergut auf die erste Taschenseitenwand aufgelegt worden, so kann diese wieder zurück in eine nach oben gerichtete Stellung verschwenkt werden, wobei es zu einem Zusammenklappen der beiden Seitenwände und einem Umschließen des Fördergutes durch die beiden Taschenseitenwände kommt. Dies kann so erfolgen, dass das Fördergut in seiner Position in dem Fördergutaufnahmebereich mehr oder weniger stark fixiert wird und somit beim Transport in der Hängefördereinrichtung keine unkontrollierten Bewegungen innerhalb der Hängetasche ausführen kann. Mehrere Fördergutartikel in der Hängetasche werden so daran gehindert aneinanderzustoßen.

Gemäß einer besonders bevorzugten Ausführungsform der Erfindung weist die erste Taschenseitenwand ein Tablett mit einer Tablettebene auf oder ist als solches ausgebildet, wobei die erste Taschenseitenwand an dem Tablett schwenkbeweglich mit dem Anhängmittel verbunden ist und die Schwenkachse in der Tablettebene oder in einer sich parallel dazu erstreckenden Ebene verläuft. Als Tablett ist hiermit ein vorzugsweise flacher Wandbereich mit glatter oder bei Bedarf rutschhemmender Oberfläche bezeichnet, der als feste Unterlage für Fördergut beim Beladen der Hängetasche dienen kann. Vorzugsweise handelt es sich dabei um eine Platte aus einem formstabilen Kunststoff bzw. Hartkunststoff. Bei einer Ausführungsform ist es vorgesehen, dass das Tablett eine muldenartige Vertiefung in der Mitte aufweist. Eine solche Vertiefung dient dazu, kleine Fördergutgegenstände beim Beladen der Hängetasche auf der Tablettmitte zu zentrieren. Gemäß einer weiteren Variante kann das Tablett von einer in einem Rahmen festgespannten Folie aus Textil und/oder Kunststoff gebildet sein.

Eine solche Tablettlösung ermöglicht auch einen sog. Liegendtransport, wobei die Hängetasche mit dem Tablett zuunterst auf einem Förderband aufliegend transportiert wird. Dabei kann sie von einer Führungsschiene der Hängefördereinrichtung entkoppelt oder alternativ weiterhin daran gekoppelt sein.

Bei einer Ausführungsform der Erfindung weist wenigstens eine der Taschenseitenwände innenseitig eine Fächerstruktur mit Vertiefungen zur Aufnahme von entsprechend kleinen Fördergutartikeln auf, die in den Vertiefungen besonders geschützt transportierbar sind. Die Fächerstruktur kann z.B. eine Art Noppenstruktur aus Erhebungen und Senken umfassen. Eine Weiterbildung dieses Aspekts der Erfindung weist die Fächerstruktur in einem elastisch formnachgiebigen Material auf. Dies kann z.B. eine auf dem Tablett der ersten Taschenseitenwand aufgeklebte oder sonstwie fixierte Schaumstoffmatte oder dgl. mit einer Fächerstruktur sein. In der Schließstellung (= Transportstellung) der Hängetasche liegt die Fächerstruktur der zweiten Taschenseitenwand gegenüber, so dass letztere ggf. in Vertiefungen der Fächerstruktur aufgenommene Fördergutartikel darin während des Transports in der Hängefördereinrichtung einschließen kann. Die Vertiefungen können unterschiedliche Dimensionen haben, um unterschiedlich große Artikel darin unterbringen zu können. Die Fächerstruktur bildet somit ein Födergutlagefixierelement.

Wie erwähnt, sollte das Tablett formstabil sein, wobei die zweite Taschenseitenwand einen dem Tablett der ersten Taschenseitenwand gegenüberliegenden, zumindest begrenzt formnachgiebigen Wandbereich aufweisen kann. Eine solche Ausführungsform hat den Vorzug, dass sich der formnachgiebige Wandbereich der Kontur des in der Hängetasche aufgenommenen Fördergutes gut anpassen und sich daran anschmiegen kann, um es in seiner Lage zu fixieren. Auch ermöglicht eine solche Lösung die Bereitstellung eines in seinem Volumen flexibel variierbaren Fördergutaufnahmebereiches und somit einen sicheren Transport von Fördergut mit jeweils unterschiedlichem Volumen.

Der formnachgiebige Wandbereich kann aus einem formschlaffen Material, z.B. einem Tuch aus Textil, gebildet sein. Vorzugsweise wird jedoch ein formnachgiebiger Wandbereich aus einem elastisch nachgiebigen Material, insbesondere eine elastisch ausbeulbare Kunststofffolie, verwendet. Die zweite Taschenseitenwand kann auf diese Weise ein Fördergutlagefixierelement umfassen oder selbst bilden. Gemäß einer besonders bevorzugten Ausführungsform der Erfindung umfasst oder bildet die zweite Taschenseitenwand und/oder die erste Taschenseitenwand somit wenigstens ein zweites Seitenwandelement zur Lagefixierung von Fördergut in dem Fördergutaufnahmebereich.

Im Folgenden wird die erste Taschenseitenwand auch als erstes Seitenwandelement bezeichnet. Die zweite Taschenseitenwand wird analog auch als zweites Seitenwandelement bezeichnet.

Gemäß einer Weiterbildung der Erfindung weist die Hängetasche eine Positionsarretiereinrichtung auf, mittels welcher das Anhängmittel und das erste Seitenwandelement bezüglich des Schwenkens um die Schwenkachse zueinander reversibel arretierbar sind. Die Positionsarretiereinrichtung dient dazu, ein unbeabsichtigtes Aufklappen der Hängetasche aus ihrer Transportstellung an der Hängefördereinrichtung zu verhindern. Entsprechende Sicherungsmittel können auch zwischen den beiden Taschenseitenwänden vorgesehen sein, um ein Aufklappen zu verhindern.

In einer besonders bevorzugten Ausführungsform ist eine solche Positionsarretiereinrichtung dazu eingerichtet, die Arretierung zwischen der ersten Taschenseitenwand und dem Anhängmittel zu lösen, wenn die Hängetasche in ihrer Transportstellung auf einem Untergrund aufgestellt wird oder gegen einen Anschlag in einer bestimmten Position stößt. Auf diese Weise kann der Öffnungsvorgang der Hängetasche leicht automatisiert werden, wobei nach Lösung der Arretierung ein Aufklappen der Hängetasche mit einfachen Mitteln möglich ist.

Unter einem weiteren Aspekt der Erfindung wird ein Fördergutbehälter zum Transport von Fördergut in einer Hängefördereinrichtung vorgeschlagen, wobei der Fördergutbehälter als Hängetasche mit einem Fördergutaufnahmebereich, der an einer Seite von einem ersten Seitenwandelement begrenzt ist, ausgebildet ist, wobei der Fördergutbehälter ein Anhängmittel zum Anhängen an einer Hängefördereinrichtung aufweist und das Anhängmittel mittels einer Schwenkeinrichtung um eine Schwenkachse schwenkbar an dem ersten Seitenwandelement befestigt ist, wobei der Fördergutaufnahmebereich an einer weiteren Seite von einem vorzugsweise als Fördergutlagefixierelement ausgebildeten zweiten Seitenwandelement begrenzt ist, wobei das zweite Seitenwandelement mit dem Anhängmittel verbunden ist, derart, dass das zweite Seitenwandelement beim Schwenken des Anhängmittels relativ zu dem ersten Seitenwandelement aus einer Transportstellung in eine Öffnungsstellung von dem ersten Seitenwandelement entfernbar ist, so dass sich der Fördergutaufnahmebereich öffnet.

Mit der Schwenkachse ist dabei eine theoretische Schwenkachse gemeint.

Unter dem Schwenken in eine Öffnungsstellung ist nicht unbedingt ein vollständiges Öffnen zu verstehen, sondern eine Bewegung von einer geschlossenen Stellung in Richtung zu einer offenen Stellung. Vorzugsweise schließt sich der Fördergutaufnahmebereich bei einem relativen Schwenken des Anhängmittels zu der ersten Seitenwand in einer Gegenrichtung zu der genannten Öffnungsbewegung. Das Anhängmittel kann ein mehrteiliges Anhängmittel sein. Es verbindet das erste Seitenwandelement mit einer Anhängstelle. Das zweite Seitenwandelement dient gemeinsam mit dem ersten Seitenwandelement dazu, Fördergut in dem Fördergutaufnahmebereich zu halten. Vorzugsweise fixiert es ein Fördergut außerdem in seiner Lage innerhalb des Fördergutaufnahmebereichs. Es kann dabei ausreichen, dass das Fördergut in nur einer Richtung, beispielsweise in einer von der ersten Seitenwand abgewandten Richtung, fixiert ist, beispielsweise im Falle sehr flacher Fördergüter, die sich in einer Ebene der ersten Seitenwand in dem Fördergutaufnahmebereich bewegen können. Besonders bevorzugt fixiert jedoch das zweite Seitenwandelement als das Fördergutlagefixierelement ein Fördergut innerhalb des Fördergutaufnahmebereichs in jeder Richtung.

Als Vorteile der genannten Struktur des Fördergutbehälters ergibt sich ein einfacher Aufbau, was eine kostengünstige Herstellung zur Folge hat. Außerdem ist der Fördergutbehälter durch das Öffnen des Fördergutaufnahmebereichs in der Öffnungsstellung gut zu beladen. Weiter können die zweiten Seitenwandelemente Fördergut, das in den Fördergutbehälter eingeworfen wird, bremsen, so dass es sanft in eine Position in dem Fördergutaufnahmebereich rutschen kann. Die Belastung des Förderguts beim Beladen ist daher vermindert.

Das Öffnen bzw. Schließen des Fördergutaufnahmebereichs ist vermittels der Befestigung des zweiten Seitenwandelementes an dem Anhängmittel realisiert, wobei eine Befestigungsstelle des zweiten Seitenwandelementes an dem Anhängmittel beim Schwenken von dem ersten Seitenwandelement entfernt wird und sich somit das zweite Seitenwandelement ebenfalls von dem ersten Seitenwandelement entfernt. In der Transportstellung ist das erste Seitenwandelement bevorzugt im Wesentlichen in Richtung der Schwerkraft oder bei Beladung mit großvolumigem Fördergut ggf. schräg nach oben ausgerichtet, wenn der Fördergutbehälter an dem Anhängmittel aufgehängt ist. In der Öffnungsstellung ist das erste Seitenwandelement vorzugsweise im Wesentlichen senkrecht zur Schwerkraftrichtung ausgerichtet. Vorzugsweise ergibt sich in der Öffnungsstellung durch eine verkippte Anordnung der ersten Seitenwand zu dem zweites Seitenwandelement eine Einführschräge, durch die Fördergüter beim Einführen in den Fördergutaufnahmebereich in ihre Transportposition geleitet werden. Vorteilhaft wird dadurch das Beladen des Fördergutbehälters erleichtert.

In einer weiteren Ausführungsform ist das erste Seitenwandelement in der Transportstellung des unbeladenen Fördergutbehälters im Wesentlichen parallel zu dem zweiten Seitenwandelement angeordnet. In der Transportstellung haben das erste Seitenwandelement und das zweite Seitenwandelement vorzugsweise zueinander die größtmögliche gemeinsame Annäherung. Da sich der Fördergutaufnahmebereich zwischen dem ersten Seitenwandelement und dem zweiten Seitenwandelement befindet, bewirkt die maximal mögliche gemeinsame Annäherung, dass auch kleine Fördergüter sicher zwischen den beiden genannten Elementen aufgenommen werden können.

In einer weiteren Ausführungsform ist ein Massenschwerpunkt des ersten Seitenwandelements und des zweiten Seitenwandelements im unbeladenen Zustand des Fördergutbehälters von der Schwenkachse aus in Richtung eines dem Anhängmittel in der Transportstellung abgewandten Endes des ersten Seitenwandelements angeordnet. Durch eine solche Anordnung der Schwenkachse wird bewirkt, dass der Massenschwerpunkt der Kombination der Seitenwandelemente in Verbindung mit der Schwerkraft dazu führt, dass das erste Seitenwandelement selbsttätig tendentiell in Richtung der Schwerkraft ausgerichtet wird, wodurch der Fördergutbehälter in seine Transportstellung übergeht. Damit einhergehend wird das Anhängmittel zu dem ersten Seitenwandelement derart verschwenkt, dass das zweite Seitenwandelement zwischen dem Anhängmittel und dem ersten Seitenwandelement gespannt wird, so dass zwischen dem ersten Seitenwandelement und dem zweiten Seitenwandelement in den Fördergutaufnahmebereich eingebrachtes Fördergut von dem zweiten Seitenwandelement gegen das erste Seitenwandelement gedrückt und somit fixiert wird. Bevorzugt ist die Schwenkachse an dem Ende des ersten Seitenwandelements angeordnet, das dem Anhängmittel in der Transportstellung zugewandt ist. Das Schließmoment, das zwischen dem Massenschwerpunkt und der Schwenkachse entsteht, ist in dieser Anordnung maximal. Um ein geringeres Schließmoment zu erreichen, kann die Schwenkachse weiter in Richtung des Massenschwerpunkts angeordnet werden. In einer weiteren Ausführungsform kann der Massenschwerpunkt auch durch Beladung des Fördergutbehälters auf der Seite der Schwenkachse, die dem Anhängmittel in der Transportstellung abgewandt ist, so verschoben werden, dass ein Drehmoment in Richtung der Transportstellung des Fördergutbehälters entsteht.

In noch einer weiteren Ausführungsform des Fördergutbehälters ist die Schwenkachse nahe einer dem Fördergutaufnahmebereich zugewandten Fördergutanlagefläche des ersten Seitenwandelements oder auf der dem Fördergutaufnahmebereich abgewandten Seite des ersten Seitenwandelements angeordnet. Durch eine solche Anordnung der Schwenkachse führt die Beladung des Fördergutbehälters mit Fördergut zu einer Schwerpunktverschiebung des Massenschwerpunkts aus der Ebene der Fördergutanlagefläche des ersten Seitenwandelements in Richtung des zweiten Seitenwandelements, was wiederum in der Transportstellung dazu führt, dass das Schließmoment erhöht wird. Dadurch kann sich der Fördergutbehälter zum Beispiel durch Schwingungen an einer Transportschiene oder dergl. weniger leicht öffnen, so dass eine erhöhte Sicherheit gegenüber Verrutschen oder Freigabe des Förderguts entsteht. Dieser Effekt wird umso stärker, je weiter die Schwenkachse von der Fördergutanlagefläche in Richtung der dem Fördergutaufnahmebereich abgewandten Seite des ersten Seitenwandelements angeordnet wird, insbesondere, wenn die Schwenkachse auf der dem Fördergutaufnahmebereich abgewandten Seite des Seitenwandelements angeordnet wird.

In einer weiteren Ausführungsform des Fördergutbehälters ist das zweite Seitenwandelement an dem ersten Seitenwandelement von der Schwenkachse aus in einer von dem Anhängmittel in der Transportstellung abgewandten Richtung befestigt. Insbesondere ist das zweite Seitenwandelement ganz am Ende des ersten Seitenwandelements befestigt oder zwischen der Schwenkachse und dem genannten Ende des ersten Seitenwandelements befestigt.

Mit der Befestigungsweise gemäß der vorangehend beschriebenen Ausführungsform geht jedoch auch einher, dass das Schwenken des ersten Seitenwandelements in Bezug auf das Anhängmittel einen Längenausgleich des zweiten Seitenwandelements erforderlich macht, wenn dieses auch in der Öffnungsstellung gespannt sein soll sowie in der Transportstellung eine Vorspannung aufweisen soll. In einer Ausführungsform wird ein Fördergutbehälter mit einem zweiten Seitenwandelement vorgeschlagen, das längennachgiebig ist. Durch die Nachgiebigkeit lässt sich das zweite Seitenwandelement strecken, wodurch es wahlweise sowohl in der Öffnungsstellung als auch in der Transportstellung gespannt sein kann. In der Öffnungsstellung hat das zweite Seitenwandelement in diesem Fall eine kürzere Länge als in der Transportstellung. Alternativ oder zusätzlich dazu umfasst diese Ausführungsform die Möglichkeit, als Längenausgleichsmechanismus ein in radialer Richtung in Bezug auf die Schwenkachse zwischen einer Befestigungsstelle des zweiten Seitenwandelements an dem Anhängmittel und der Schwenkachse längenvariables Anhängmittel vorzusehen. Dann ist es möglich, ein starres zweites Seitenwandelement vorzusehen. Die durch die Kinematik vorgegebene Zwangsbedingung des sich mit dem Schwenken ändernden Abstands zwischen den Befestigungsstellen des zweiten Seitenwandelements wird dann durch das beispielsweise teleskopisch einschiebbare oder durch Biegen verkürzbare Anhängmittel ausgeglichen. Dabei kann das zweite Seitenwandelement in jeder Schwenkposition gespannt bleiben. In noch einer weiteren Variante des Fördergutbehälters dieser Ausführungsform kann das zweite Seitenwandelement eine Länge aufweisen, die größer oder gleich dem Abstand zwischen der Befestigungsstelle des zweiten Seitenwandelements an dem Anhängmittel und der Befestigungsstelle des zweiten Seitenwandelements an dem ersten Seitenwandelement ist. Dann kann das zweite Seitenwandelement in der Öffnungsstellung ungespannt sein, insbesondere durchhängen. Vorzugsweise ist die Länge des zweiten Seitenwandelements in dieser Variante so bemessen, dass es in der Transportstellung gespannt, bevorzugt leicht gespannt ist.

In einer weiteren Ausführungsform des Fördergutbehälters ist zwischen der Befestigungsstelle des zweiten Seitenwandelements an dem ersten Seitenwandelement und dem dem Anhängmittel in der Transportstellung abgewandten Ende des ersten Seitenwandelements über der Fördergutanlagefläche des ersten Seitenwandelements ein in der Transportstellung unterer Abschnitt des Fördergutaufnahmebereichs als Taschenfach vorgesehen, das von der Fördergutanlagefläche und einer Taschenoberseite begrenzt ist. Vorzugsweise ist das Taschenfach an den Seiten, die nicht in Richtung des Anhängmittels in der Transportstellung gerichtet sind, geschlossen ausgeführt. Die offene Seite des Taschenfachs in Richtung des Anhängmittels in der Transportstellung geht vorzugsweise in einen Teil des Fördergutaufnahmebereichs zwischen dem ersten Seitenwandelement und dem zweiten Seitenwandelement über. Besonders bevorzugt ist die Taschenoberseite aus einem Abschnitt des zweiten Seitenwandelements gebildet, in dem sich das zweite Seitenwandelement hinter seiner Befestigungsstelle an dem ersten Seitenwandelement in der von dem Anhängmittel in der Transportstellung abgewandten Richtung fortsetzt. Die Einführungsschräge, die das zweite Seitenwandelement in der Öffnungsstellung vorzugsweise bildet, setzt sich vorzugsweise durch eine Elastizität des zweiten Seitenwandelements in wenigstens einem Teil der Taschenoberseite übergangslos fort. Das Taschenfach ist vorzugsweise von drei über die Fördergutanlagefläche aufragenden Rändern des ersten Seitenwandelements begrenzt. Vorzugsweise ist die Taschenoberseite an den oberen Enden der Ränder befestigt. Die Taschenoberseite ist vorzugsweise aus einem nachgiebigen Material gefertigt, so dass sie durch Fördergüter mit größerer Höhe als der Abstand zwischen der Taschenoberseite und der Fördergutanlagefläche auf dem ersten Seitenwandelement aufgewölbt werden kann. Dadurch kann die Lage eines Förderguts innerhalb der Tasche noch besser fixiert werden. Vorzugsweise ist die Tasche im Wesentlichen über die gesamte Fläche des ersten Seitenwandelements ab der Befestigungsstelle des zweiten Seitenwandelements an dem ersten Seitenwandelement in die von dem Anhängmittel in der Transportstellung abgewandte Richtung vorgesehen.

In einer weiteren Ausführungsform des Fördergutbehälters ist das zweite Seitenwandelement eine elastische Folie. Eine solche Folie kann Fördergut in der Transportstellung von einer Seite teilweise oder vollständig umschließen, wobei das Fördergut bevorzugt zugleich an die Fördergutanlagefläche angedrückt wird. Auf diese Weise kann eine gute Lagefixierung unabhängig von der Größe des Förderguts erreicht werden. Die Folie muss dabei keine geschlossene Fläche aufweisen. Als Materialien eignen sich beispielsweise netzartige Textilien, wie Gestricke, Gewebe, Tuch, Vliese, Netze oder dgl., die, wenn die Struktur in sich nachgiebig ist, wie etwa bei einem Gestrick, aus unnachgiebigem Garn hergestellt sein können, oder aus elastischem Garn hergestellt sein können, was bei Geweben und dgl. vorteilhaft und bevorzugt ist. Alternativ kann die elastische Folie ein elastisches Folienmaterial, wie etwa eine Gummibahn, eine Latexfolie oder eine andere ausreichend nachgiebige Kunststofffolie oder dgl. umfassen.

Bei Verwendung einer nicht geschlossenen Folie, wie etwa einem Netz oder netzartigen Gewebe oder einer durchsichtigen Folie, ergibt sich der Vorteil der Sichtbarkeit des Förderguts durch das zweite Seitenwandelement. Auf diese Weise ist eine Kontrolle des Inhaltes möglich, insbesondere hinsichtlich der Art und der Beschaffenheit von Fördergütern, besonders von Beschädigungen.

Nach einer weiteren Ausführungsform des Fördergutbehälters ist das Anhängmittel als Bügel ausgeführt, insbesondere als Bügel mit zwei Schenkeln und einem die Schenkel verbindenden Mittenabschnitt. Insbesondere kann der Bügel aus mehreren Teilen bestehen, beispielsweise aus zwei einzelnen Elementen, die an oder nahe einer Anhängstelle des Anhängmittels unverbunden zusammenlaufen. Weiter ist auch ein geschlossener Rahmen denkbar, durch den vorzugsweise das erste Seitenwandelement oder Teile davon verlaufen. Den genannten Varianten ist gemeinsam, dass sie zwei voneinander entfernte Stellen an dem ersten Seitenwandelement mit einer Anhängstelle verbinden können. Vorzugsweise liegen diese beiden Stellen jeweils an einander gegenüberliegenden Rändern des ersten Seitenwandelements. Das Anhängmittel überspannt und verbindet die beiden Stellen an dem Seitenwandelement miteinander, wobei die Anhängstelle vorzugsweise mit der Verbindung zwischen den beiden Stellen an dem ersten Seitenwandelement verbunden ist, beispielsweise durch einen Ausleger des Anhängmittels. In der Variante des Anhängmittels als Bügel bilden die zwei Schenkel und der Mittenabschnitt die Verbindung zwischen den beiden Stellen an dem ersten Seitenwandelement. Ein Ausleger ist bevorzugt an dem Mittenabschnitt angeordnet.

In einer weiteren Ausführungsform des Fördergutbehälters ist das Anhängmittel vorzugsweise so ausgeführt, dass es im Wesentlichen in einer Ebene liegt.

In einer weiteren Ausführungsform ist der Fördergutbehälter per Durchtritt von Fördergut durch das Anhängmittel be- und entladbar. Da das Anhängmittel das erste Seitenwandelement, das beim Be- und/oder Entladen vorzugsweise im Wesentlichen quer zur Schwerkraft ausgerichtet ist, von dem Anhängmittel vorzugsweise an beiden Seiten gehalten ist, bildet das Anhängmittel in seiner Verbindung der beiden Befestigungsstellen des Anhängelements an dem ersten Seitenwandelement ein Tor, das zwischen dem ersten Seitenwandelement und der Anhängstelle aufgespannt ist. Der Fördergutaufnahmebereich befindet sich dabei ab dem Tor in Richtung des Verlaufs des zweiten Seitenwandelementes. Um daher Fördergüter zu be- und entladen, müssen diese in dieser Ausführungsform das ein Tor bildende Anhängmittel wenigstens partiell durchtreten. Das Schließen des Tors durch Schwenken des Anhängmittels in die Transportstellung bewirkt vorteilhaft ein Verschließen des Fördergutaufnahmebereichs und ein Spannen des zweiten Seitenwandelementes.

In einer weiteren Ausführungsform ist die Schwenkeinrichtung am Ende der Schenkel des Anhängmittels angeordnet. Dabei bilden vorzugsweise die Enden der Schenkel jeweils ein Gelenk mit dem ersten Seitenwandelement. Besonders bevorzugt ist die Schwenkeinrichtung als zwei Scharniere ausgebildet, bei denen jeweils ein Teil der Schenkel, bevorzugt das Ende der Schenkel, durch Löcher in dem ersten Seitenwandelement gesteckt ist. Die Löcher in dem Seitenwandelement befinden sich vorzugsweise in einem Rand, der gegenüber der Fördergutanlagefläche vorsteht. Alternativ können Vorsprünge des Seitenwändelements durch Löcher in den Schenkeln des Anhängmittels verlaufen. Diese beiden alternativen Verbindungen sind jeweils drehbar ausgeführt. Besonders bevorzugt ist die Schwenkeinrichtung in Form von zwei Scharnieren ausgebildet.

In einer weiteren Ausführungsform des Fördergutbehälters ist das erste Seitenwandelement im Wesentlichen starr ausgeführt. Auf diese Weise bildet das erste Seitenwandelement ein geeignetes Widerlager für die Andruckkräfte durch das zweite Seitenwandelement. In noch einer weiteren Ausführungsform des Fördergutbehälters ist das erste Seitenwandelement im Wesentlichen flach gestaltet. Diese Form ist unaufwendig herzustellen und gestattet das Andrücken von Fördergut durch das zweite Seitenwandelement weitgehend unabhängig von der Form des Förderguts. In noch einer weiteren Ausführungsform des Fördergutbehälters ist das erste Seitenwandelement in Form eines wenigstens teilweise seitlich berandeten Tabletts ausgeführt. Ein Rand erstreckt sich dabei vorzugsweise von der Schwenkachse bis zu dem Ende des ersten Seitenwandelements, das dem Anhängmittel in der Transportstellung abgewandt ist und bevorzugt entlang dieses Endes. Vorzugsweise ist die Schwenkeinrichtung in oder an dem Rand vorgesehen. Vorzugsweise bildet der Rand einen Teil des Taschenfaches. Besonders bevorzugt überspannt in diesem Fall die Taschenoberseite die Oberseite des Randes.

In einer weiteren Ausführungsform des Fördergutbehälters umfasst der Fördergutbehälter eine Positionsarretiereinrichtung, mittels der das Anhängmittel und das erste Seitenwandelement bezüglich des Schwenkens zueinander reversibel arretierbar sind. Vorzugsweise wird die Arretierung durch Formschluss innerhalb der Positionsarretiereinrichtung und/oder zwischen der Positionsarretiereinrichtung und dem Anhängmittel und/oder dem ersten Seitenwandelement bewirkt. Besonders bevorzugt ist das Anhängmittel gegenüber dem ersten Seitenwandelement in der Öffnungsstellung und/oder der Transportstellung des Fördergutbehälters und/oder in Positionen zwischen der Öffnungsstellung und der Transportstellung des Fördergutbehälters arretierbar. Alternativ kann die Arretierung auch durch Reibung bzw. entsprechenden Kraftschluss zwischen zueinander verschieblichen Elementen, von denen eines mit dem ersten Seitenwandelement und das andere mit dem Anhängmittel verbunden ist, bewirkt werden. Es können auch kombiniert kraft- und formschlüssige Positionsarretiereinrichtungen verwendet werden. Die Positionsarretiereinrichtung kann einen Mechanismus zum Arretieren und Dearretieren aufweisen. Die Positionsarretiereinrichtung kann in Verbindung mit allen in dieser Anmeldung beschriebenen Ausführungsformen des Fördergutbehälters als auch mit den Ausführungsformen von Fördergutbehältern, die in der DE 10 2012 212-518.3 beschrieben sind, zum Einsatz kommen. Die Positionsarretiereinrichtung ist eine besondere Ausführungsform der Schwenkeinrichtung, die über die Schwenkfunktion hinaus eine Arretierfunktion bietet. Vorzugsweise sind an einem Fördergutbehälter zwei Positionsarretiereinrichtungen an einer Verbindungsstelle zwischen dem Anhängmittel und dem ersten Seitenwandelement vorgesehen.

In einer weiteren Ausführungsform, die nicht Teil der Erfindung ist, wird eine Transportschiene für einen Fördergutbehälter nach einem der vorangehenden Ansprüche vorgeschlagen, wobei die Transportschiene zur Aufnahme des Anhängmittels geeignet ist und in einer Transportrichtung vor dem Erreichen einer Beladestation ein Gefälle aufweist, durch das das Anhängmittel eines Fördergutbehälters beschleunigbar ist. Eine solche Beschleunigung bewirkt ein Vorauseilen der Anhängstelle des Anhängmittels und somit eine Schrägstellung des Fördergutbehälters. Durch diese Schrägstellung kann bewirkt werden, dass der Fördergutbehälter eine Vorneigung erfährt und somit sanfter auf eine Beladestation aufläuft, die den Fördergutbehälter in eine horizontale Beladestellung bringt. Dabei wird der Fördergutbehälter zugleich in seine Öffnungsstellung gebracht. Außerdem kann die Beschleunigung eine Vereinzelung mehrerer nahe hintereinander transportierter Fördergutbehälter bewirken.

In noch einer weiteren Ausführungsform, die nicht Teil der Erfindung ist, wird eine Beladestation für einen Fördergutbehälter nach einer der vorangehend beschriebenen Ausführungsformen vorgeschlagen, wobei die Beladestation unterhalb einer Transportschiene zur Aufnahme eines erfindungsgemäßen Fördergutbehälters angeordnet ist und eine Oberkante einer der Transportrichtung des Fördergutbehälters entgegengerichteten Seite der Beladestation eine Abschrägung oder Abrundung aufweist, über die ein Fördergutbehälter beim Übergang in seine Öffnungsstellung in der Transportschiene bewegbar ist. Durch eine solche Abschrägung oder Abrundung wird bewirkt, dass das Öffnen des Fördergutbehälters verschleißarm und geräuscharm vonstatten geht. Die Abschrägung oder Abrundung ist vorzugsweise zusätzlich geeignet gepolstert, um den ankommenden Fördergutbehälter sanfter aufzunehmen. Vorzugsweise weist die Beladestation eine geeignete Höhe auf, so dass das Seitenwandelement in eine im Wesentlichen zur Schwerkraft senkrechte Lage gebracht werden kann, während sich die Anhängstelle des Anhängmittels in der Transportschiene oberhalb des Fördergutbehälters befindet.

In einem weiteren Aspekt der vorliegenden Erfindung wird gemäß Anspruch 14 eine Hängefördereinrichtung vorgeschlagen, die einen Fördergutbehälter nach einer der vorangehend beschriebenen Ausführungsformen, eine Transportschiene und/oder eine Beladestation umfasst.

Im Folgenden werden beispielhaft Ausführungsformen der vorliegenden Erfindung anhand der Figuren im Anhang beschrieben, in denen
- Fig. 1: eine Seitenansicht eines unbeladenen Fördergutbehälters in einer Öffnungsstellung zeigt,
- Fig. 2: eine Draufsicht auf den unbeladenen Fördergutbehälter in seiner Öffnungsstellung zeigt,
- Fig. 3: den unbeladenen Fördergutbehälter in einer Transportstellung in einer Seitenansicht zeigt,
- Fig. 4: den unbeladenen Fördergutbehälter in seiner Transportstellung in einer Frontansicht zeigt,
- Fig. 5: einen Öffnungsvorgang eines Fördergutbehälters an einer Beladestation zeigt,
- Fig. 6a: eine erste Ausführungsform einer Positionsarretiereinrichtung in einem Querschnitt parallel zu einer Hauptebene eines Seitenwandelements zeigt,
- Fig. 6b: die in der Fig. 6a gezeigte Ausführungsform einer Positionsarretiereinrichtung in einem Querschnitt parallel zu einem Randabschnitt des Seitenwandelements, der senkrecht zu der Hauptfläche des Seitenwandelements angeordnet ist, in einer nicht arretierten Stellung zeigt,
- Fig. 6c: die Ausführungsform der Positionsarretiereinrichtung aus den Figuren 6a und 6b in demselben Querschnitt wie in der Fig. 6b, jedoch in einer arretierten Stellung zeigt,
- Fig. 7a: eine weitere Ausführungsform einer Positionsarretiereinrichtung in einem Querschnitt in der Ebene des Seitenwandelements in einem arretierten Zustand zeigt,
- Fig. 7b: die Ausführungsform der Positionsarretiereinrichtung aus Fig. 7a in demselben Querschnitt in einer nicht arretierten Stellung zeigt,
- Fig. 8a: eine weitere Ausführungsform einer Positionsarretiereinrichtung in einem Querschnitt parallel zu der Ebene des Seitenwandelements in nahezu arretierter Transportstellung des Fördergutbehälters zeigt,
- Fig. 8b: die Positionsarretiereinrichtung aus Fig. 8a in einem Querschnitt, der in einem rechten Winkel zu dem Querschnitt in der Fig. 8a steht, ebenfalls in nahezu arretierter Transportstellung zeigt,
- Fig. 8c: die Ausführungsform der Positionsarretiereinrichtung aus den Fig. 8a und 8b in demselben Querschnitt wie in der Fig. 8b in einer Öffnungsstellung der Transporteinrichtung zeigt,
- Figur 9: eine Frontansicht einer weiteren Ausführungsform des Fördergutbehälters nach der Erfindung in seiner vertikalen Schließstellung zeigt,
- Figur 10: eine Seitenansicht der Ausführungsform des Fördergutbehälters nach Figur 9 in seiner vertikalen Schließstellung zeigt,
- Figur 11: eine Seitenansicht der Ausführungsform des Fördergutbehälters nach Fig. 9 und 10 in seiner horizontalen Beladestellung zeigt,
- Figur 12: eine Seitenansicht der Ausführungsform des Fördergutbehälters nach Fig. 9-11 in seiner Entladestellung zeigt,
- Figur 13: eine Seitenansicht einer weiteren Ausführungsform des Fördergutbehälters nach der Erfindung in seiner horizontalen Beladestellung zeigt,
- Figur 14: eine Seitenansicht der Ausführungsform des Fördergutbehälters nach Fig. 13 in seiner Entladestellung zeigt,
- Figur 15: eine Frontansicht einer Ausführungsform des Fördergutbehälters nach Fig. 13 - 14 in seiner vertikalen Schließstellung zeigt,
- Figur 16: eine Seitenansicht der Ausführungsform des Fördergutbehälters nach Fig. 13 -15 in seiner vertikalen Schließstellung zeigt,
- Figur 17: eine Seitenansicht der Ausführungsform des Fördergutbehälters nach Fig. 13 - 16 in seiner Beladestellung zeigt,
- Figur 18: eine Seitenansicht der Ausführungsform des Fördergutbehälters nach Fig 13 - 17 in seiner Entladestellung zeigt,
- Figur 19: eine Frontansicht einer weiteren Ausführungsform des Fördergutbehälters in seiner vertikalen Schließstellung zeigt,
- Figur 20: eine Draufsicht auf ein Fördergutlagefixierelement zeigt und
- Figur 21: eine Draufsicht auf ein alternatives Fördergutlagefixierelement zeigt.

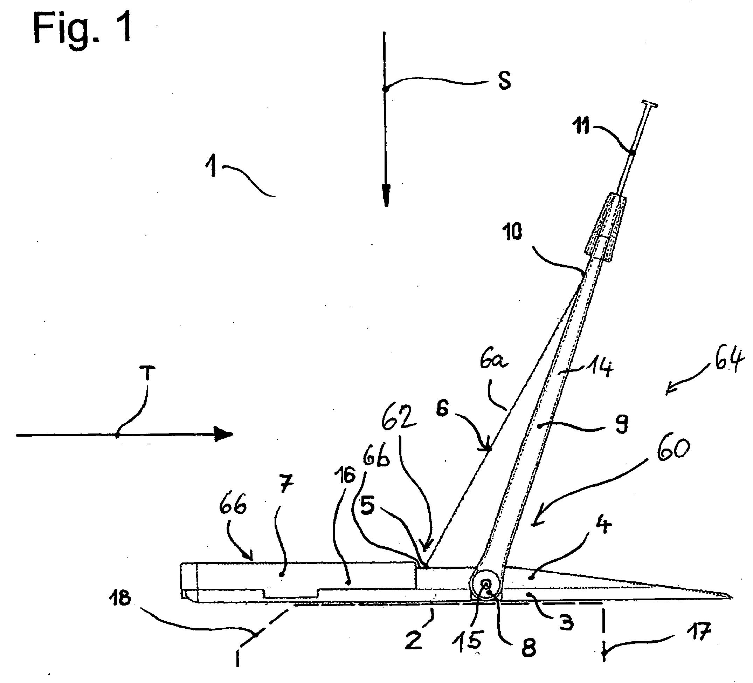

Figur 1 zeigt als Ausführungsbeispiel der Erfindung einen Fördergutbehälter 1 in einer Öffnungsstellung in Seitenansicht. Der Pfeil S gibt die Wirkungsrichtung der Schwerkraft an. Der Fördergutbehälter 1 ist eine Hängetasche für eine Hängefördereinrichtung. In Figur 1 ist die im Folgenden weiterhin als Fördergutbehälter 1 bezeichnete Hängetasche in einer Beladestellung gezeigt, in der sie mit einer ersten Taschenseitenwand 2 auf einer Stützplattform einer Beladestation 17 aufliegt und weit geöffnet ist, so dass bequem Fördergut in den Fördergutaufnahmebereich 60 zwischen der ersten Taschenseitenwand 2 und einer zweiten Taschenseitenwand 6 eingebracht werden kann. Die einander gegenüberliegenden und den Fördergutaufnahmebereich 60 zwischen sich begrenzenden Taschenseitewände 2, 6 sind in einem Klappverbindungsbereich 62 so miteinander verbunden, dass sie zum Öffnen und Schließen des Fördergutaufnahmebereiches 60 auseinanderklappbar sind und eine maulartige Taschenöffnung 64 bilden. Die erste Taschenseitenwand 2 weist einen vorzugsweise ebenen Hauptflächenabschnitt 3 als Tablettebene oder Bodenabschnitt 3 und einen über diesen Hauptflächenabschnitt 3 aufragenden Radkonturabschnitt 4 auf. An diesem Randkonturabschnitt 4 ist an einer Befestigungsstelle 5 im Klappverbindungsbereich 62 die zweite Taschenseitenwand 6 klappbar befestigt. Im Folgenden wird die erste Taschenseitenwand 2 auch als erstes Seitenwandelement 2 bezeichnet. Die zweite Taschenseitenwand 6 wird im Folgenden auch als zweites Seitenwandelement 6 bezeichnet.

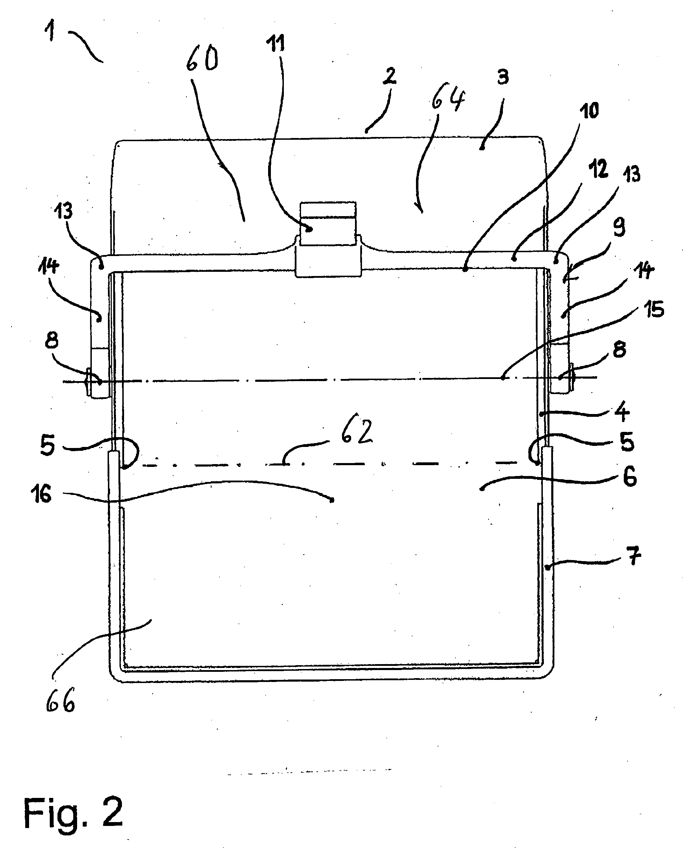

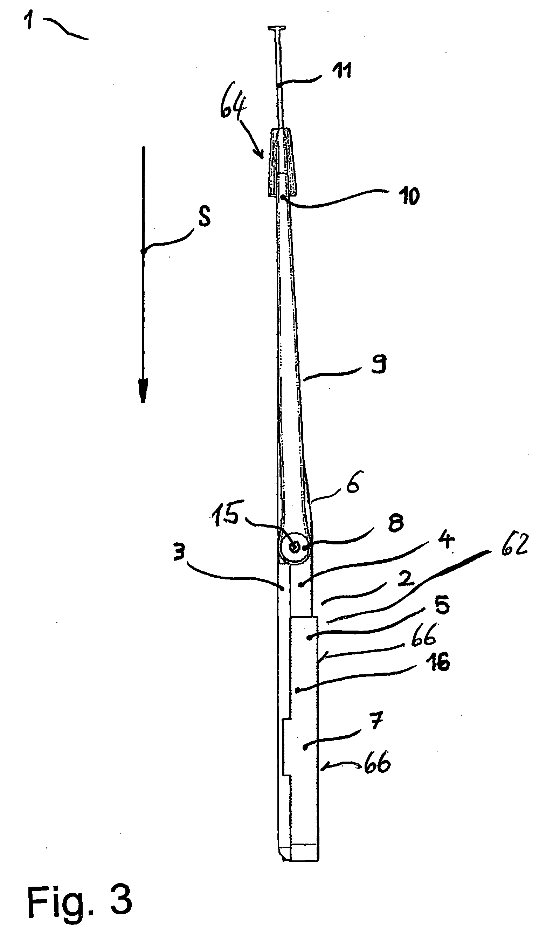

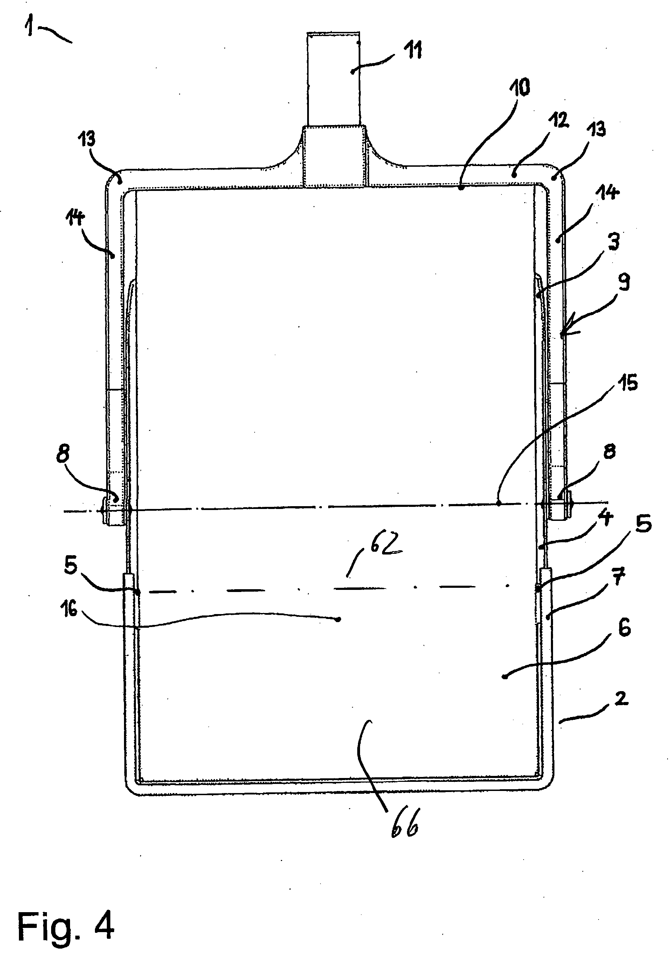

Die Hängetasche 1 weist ferner als Anhängmittel 9 einen Bügel auf, der einen Mittenabschnitt 12 und zwei an Abknickstellen 13 davon abstehende Bügelschenkel 14 hat. An den Enden der beiden Bügelschenkel 14 ist das Anhängmittel 9 vermittels einer Schwenkeinrichtung 8 mit der ersten Taschenseitenwand 2 an entgegengesetzten Stellen des Randkonturabschnitts 4 schwenkbar um eine Schwenkachse 15 verbunden, die in einer zur Tablettebene 3 parallelen Ebene liegt. In der in den Figuren 3 und 4 gezeigten Transportstellung der Hängetasche 1 verläuft die Schwenkachse 15 normalerweise horizontal. Die erste Taschenseitenwand 2 kann aus der in den Figuren 3 und 4 gezeigten Stellung um die Schwenkachse 15 verschwenkt werden, um in eine Stellung gemäß Figur 1 und 2 zu gelangen. Dabei kommt es zum Auseinanderklappen der beiden Taschenseitenwände 2, 6, da die zweite Taschenseitenwand 6 an ihrem von dem Klappverbindungsbereich 62 entfernten Ende mit dem Mittenabschnitt 12 des Anhängmittels 9 verbunden ist und daher der Schwenkbewegung der ersten Taschenseitenwand 2 relativ zum Anhängmittel 9 nicht folgt.

Die Schwenkeinrichtung 8 umfasst an den entgegengesetzten Randkonturabschnitten 4 des ersten Seitenwandelementes 2 einen jeweiligen Vorsprung, der in ein betreffendes Lagerloch in dem Anhängmittel 9 verläuft, so dass auf diese Weise einfach aufgebaute Drehgelenke zwischen dem Anhängmittel 9 und der ersten Taschenseitenwand 2 realisiert sind.

Bei dem hier erörterten ersten Beispiel der Erfindung ist ein Abschnitt 6a der zweiten Taschenseitenwand 6 relativ zur ersten Taschenseitenwand 2 klappbar, wie dies gut in Figur 1 erkennbar ist. Jenseits des Klappverbindungsbereichs 62 geht der klappbare Abschnitt 6a in einen nicht klappbaren Abschnitt 6b der zweiten Taschenseitenwand 6 über und ist dort unter Nutzung eines Fixiermittels 7 umlaufend mit dem Randkonturabschnitt 4 mit der ersten Taschenseitenwand 2 verbunden. Auf diese Weise ist in dem in Figur 1 linken und in Figur 3 unteren Bereich der Hängefördertasche 1 ein sich an die maulartige Öffnung 64 anschließendes und an fünf Außenseiten geschlossenes Taschenfach 66 gebildet. Der Randkonturabschnitt 4 läuft in Richtung weg von dem Taschenfach 66 schräg aus, was das Beladen der Hängetasche 1 erleichtert.

Das bügelförmige Anhängmittel 9 weist einen Ausleger 11 auf, mit dem es z.B. an ein längs einer Führungsschiene geführt bewegbares Fördermittel einer Hängefördereinrichtung anhängbar ist.

Die erste Taschenseitenwand 2 ist ein formstabiles Seitenwandelement und besteht vorzugsweise aus einem Hartkunststoff. In der in Figur 1 gezeigten Beladeposition ist dieses Seitenwandelement 2 als Beladetablett nutzbar, wobei Fördergut auf dieses Beladetablett aufgelegt und z.B. in Richtung des Taschenfachs 66 weiterverschoben werden kann. Die zweite Taschenseitenwand 6 ist vorzugsweise aus einem formnachgiebigen Material gebildet, so dass sie ausbeulbar ist und Fördergut in dem Fördergutaufnahmebereich 60 formnachgiebig umschließen und gegen Verrutschen in der Hängetasche 1 als zweites Seitenwandelement 6 sichern kann. Die zweite Taschenseitenwand 6 kann z.B. von einem Textiltuch gebildet sein. Vorzugsweise umfasst sie jedoch eine ausbauchbare Kunststofffolie, die sich formnachgiebig an das Fördergut im Fördergutaufnahmebereich 60 zumindest bereichsweise anschmiegen kann. Auch kann eine Fördertasche nach der Erfindung einen oder mehrere Spanngurte oder dgl. aufweisen, um eine lagefixierende Wirkung auf das aufgenommene Fördergut auszuüben.

In Figur 1 ist die zweite Taschenseitenwand 6 in Öffnungsstellung gespannt gezeigt und bildet eine Schräge gegenüber dem Bodenabschnitt 3 der ersten Taschenseitenwand 2, so dass von rechts in Figur 1 aufzunehmendes Fördergut von der zweiten Taschenseitenwand 6 in Richtung des Taschenfachs 66 geleitet werden kann. Die in Figur 1 gezeigte Öffnungsstellung ermöglicht die Aufnahme auch von Fördergütern mit einer Höhe, die die Höhe des Randkonturabschnitts 4 erheblich übersteigt. In der Transportstellung wölbt sich dann die zweite Taschenseitenwand 6 lagefixierend über das Fördergut.

Wenngleich die als Lagefixierelement wirksame zweite Taschenseitenwand 6 in Figur 1 in einem gespannten Zustand dargestellt ist, muss dies nicht unbedingt sein. Allerdings sollte das Lagefixierelement 6 beim Übergang des Fördergutbehälters 1 in die Transportstellung tendentiell zunehmend in einen entsprechenden Spannzustand übergehen. Das Öffnungsmaul 64 der Hängetasche 1 ist beim Beladen bzw. Entladen vorzugsweise in Transportrichtung T der Hängetasche in einer betreffenden Hängefördereinrichtung geöffnet.

Figur 2 zeigt eine Draufsicht auf den Fördergutbehälter 1 in seiner Öffnungsstellung. Die Darstellung in der Figur 2 entspricht einer Ansicht aus der Richtung, die in Figur 1 der Schwerkraftrichtung S entspricht. Das quer zur Schwerkraft S ausgerichtete erste Seitenwandelement 2 ist dementsprechend mit Blick auf dessen Bodenabschnitt 3 zu sehen. Der Bodenabschnitt 3 ist an drei seiner Seiten von dem starren Randkonturabschnitt 4 berandet. Die zweite Taschenseitenwand 6 erstreckt sich von dem Mittenabschnitt 12 des Anhängmittels 9 zu Befestigungsstellen 5 an dem Randkonturabschnitt 4 des ersten Seitenwandelements 2 und setzt sich zu dem dem Anhängmittel 9 abgewandten Ende des ersten Seitenwandelements 2 bis zu dem Randkonturabschnitt 4, der dieses Ende umgibt, fort. Das zweite Seitenwandelement 6 überdeckt dabei den Bodenabschnitt 3 in Höhe der Oberkante des Randkonturabschnitts 4. Das zweite Seitenwandelement 6 bildet zwischen den Befestigungsstellen 5 und dem dem Anhängmittel 9 abgewandten Ende des ersten Seitenwandelements 2 die Oberseite des Taschenfachs 66, die mit dem Fixiermittel 7 an dem Randkonturabschnitt 4 befestigt ist. Das Fixiermittel 7 folgt dabei wenigstens teilweise dem Verlauf des Randkonturabschnitts 4 in einem von dem Anhängmittel 9 abgewandten Endabschnitt des ersten Seitenwandelements 2. Wie schon erwähnt, ist das Anhängmittel 9 bügelförmig ausgeführt und weist den Mittenabschnitt 12 und die davon abstehenden Schenkel 14 auf, welche mittels der Gelenke 8 schwenkbar mit dem ersten Seitenwandelement 2 verbunden sind. Das zweite Seitenwandelement 6 ist an dem Anhängmittel 9 an dem Mittenabschnitt 12 befestigt, was schematisch durch die Befestigungsstelle 10 dargestellt ist.

Figur 3 zeigt den Fördergutbehälter 1 in einer Transportstellung in einer Seitenansicht. Die Schwerkraftrichtung S verläuft in der Figur 3 von oben nach unten. In der Transportstellung ist das erste Seitenwandelement 2 bei unbeladenem Fördergutbehälter 1 im Wesentlichen parallel zu der Schwerkraftrichtung S ausgerichtet. Das Anhängmittel 9 ist bei unbeladenem Fördergutbehälter 1 näherungsweise parallel zu dem ersten Seitenwandelement 2 ausgerichtet. Durch diese relative Lage des Anhängmittels 9 zu dem ersten Seitenwandelement 2 ist das zweite Seitenwandelement 6 zwischen der Befestigungsstelle 10 und der Befestigungsstelle 5 im Klappverbindungsbereich 62 parallel über dem Bodenabschnitt 3 des ersten Seitenwandelements 2 gespannt, so dass zwischen dem zweiten Seitenwandelement 6 und dem Bodenabschnitt 3 eingebrachtes Fördergut unter Ausbeulung des zweiten Seitenwandelementes 6 gegen den Bodenabschnitt 3 gedrückt wird. Das zweite Seitenwandelement 6 wölbt sich lagefixierend über das eingebrachte Fördergut beim Übergang in die Transportstellung. Vorzugsweise liegt der Schwerpunkt 16 des ersten Seitenwandelements 2 in Verbindung mit dem zweiten Seitenwandelement 6 in der Transportstellung weiter in Richtung der Schwerkraft S als die Schwenkeinrichtung 8, so dass die Schwerkraft S ein Herunterhängen der von dem Anhängmittel 9 abgewandten Seite des ersten Seitenwandelements 2 bewirkt. Auf diese Weise wird die Schließstellung durch die Schwerkraft S stabilisiert und eine Andruckkraft auf Fördergüter im Fördergutaufnahmebereich 60 zwischen dem zweiten Seitenwandelement 6 und dem ersten Seitenwandelement 2 bewirkt. Das Taschenfach 66 zwischen dem ersten Seitenwandelement 2 und dem in Richtung des von dem Anhängmittel 9 abgewandten Ende des ersten Seitenwandelements 2 fortgesetzten zweiten Seitenwandelement 6 ist durch den Randkonturabschnitt 4 in Schwerkraftrichtung S und in den beiden Querrichtungen dazu durch das Fixiermittel 7 geschlossen, so dass Fördergut den Fördergutaufnahmebereich 60 in Schwerkraftrichtung S und quer dazu nicht verlassen kann. Das Fördergut ist somit sicher in dem Fördergutbehälter 1 gehalten.

Figur 4 zeigt eine Frontansicht des Fördergutbehälters 1 in seiner Transportstellung. In der Figur 4 ist zu erkennen, wie sich das zweite Seitenwandelement 6 von seiner Befestigungsstelle 10 an dem Mittenabschnitt 12 des Anhängmittels 9 bis zu dem dem Anhängmittel 9 abgewandten Ende des ersten Seitenwandelements 2 erstreckt, an dem es mit dem Fixiermittel 7 befestigt ist. Außerdem ist das zweite Seitenwandelement 6 an den Befestigungsstellen 5 mit dem Randabschnitt 4 des ersten Seitenwandelements 2 verbunden. Die Befestigungsstellen 5 definieren den Klappverbindungsbereich, wobei ihre Verbindungslinie eine zur Schwenkachse 15 parallele Klappachse für das zweite Seitenwandelement 6 und das erste Seitenwandelement 2 darstellen kann. In Richtung der Schwerkraft S ist unterhalb der Befestigungsstelle 5 zwischen dem zweiten Seitenwandelement 6 und dem ersten Seitenwandelement 2 das Taschenfach 66 ausgebildet. Dieses ist in Richtung der Schwerkraft S, die in Fig. 4 von oben nach unten verläuft, und quer dazu von dem Randkonturabschnitt 4 begrenzt. Die Befestigungsstellen 5 können derart ausgebildet sein, dass sie das zweite Seitenwandelement 6 nur senkrecht zur Ansichtsebene fixieren, jedoch zugleich eine Dehnung des zweiten Seitenwandelements auch im Bereich des Taschenfaches 66 und somit eine Bewegung in der Ansichtsebene auch an den Befestigungsstellen 5 ermöglichen.

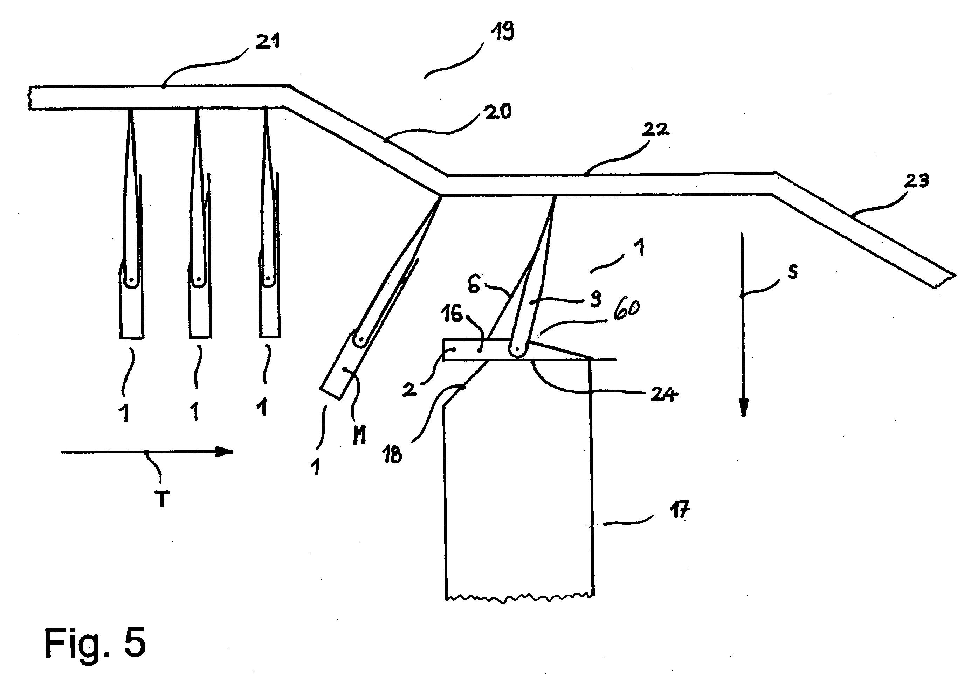

Figur 5 zeigt das Öffnen eines Fördergutbehälters 1, der in eine Transportschiene 19 einer Hängefördereinrichtung eingehängt ist. Bei dem Öffnungsvorgang kommt der Fördergutbehälter 1 auf einer Beladestation 17 in seiner Öffnungsstellung zu liegen. Das erste Seitenwandelement 2 ist dabei gegenüber dem Anhängmittel 9 verschwenkt, so dass sich zwischen dem mit dem Anhängmittel 9 nach oben erstreckenden zweiten Seitenwandelement 6 und dem ersten Seitenwandelement 2 der Fördergutaufnahmebereich 60 öffnet, der entgegen der Transportrichtung T beladen werden kann.

In der Figur 5 sind fünf Hängetaschen als Fördergutbehälter 1 dargestellt, die entlang der Transportschiene 19 in der Transportrichtung T gefördert werden. Drei der Fördergutbehälter 1 befinden sich in der Figur 5 beispielhaft in einem im Wesentlichen ebenen Abschnitt 21 der Transportschiene 19 in einer Warteposition für das Beladen. Zum Beladen wird ein Fördergutbehälter 1 im Beispielsfall auf ein Gefälle 20 der Transportschiene 19 gebracht, auf dem die Anhängestelle des Fördergutbehälters 1 beschleunigt wird. Da sich der Massenschwerpunkt M des Fördergutbehälters 1 erheblich unterhalb der Anhängstelle in dem Fördergutbehälter 1 befindet, ergibt sich ein Drehmoment, das den Fördergutbehälter 1 in der Figur 5 in Uhrzeigerrichtung dreht, während sich die Anhängstelle das Gefälle 20 hinab bewegt. Bei Erreichen des Beladeabschnitts 22 der Transportschiene 19 ist der Fördergutbehälter 1 somit in der Zeichnungsebene gegenüber der Schwerkraftrichtung S verdreht. Abweichend von der Darstellung in der Figur 5 kann die Beladestation 17 in der Praxis in Transportrichtung so angeordnet sein, dass der schon schräggestellte Fördergutbehälter 1 am Ende des Gefälles auf die Schräge 18 der Beladestation 17 trifft. Vorzugsweise wird der Fördergutbehälter 1 durch seinen Schwung aus dem Gefälle 20 von der Abschrägung 18 auf ein sich vorzugsweise oben auf der Beladestation 17 befindliches Plateau 24 gezogen. Dabei öffnet sich der Fördergutaufnahmebereich 60, indem das erste Seitenwandelement 2 aus einer schrägen Ausrichtung gegenüber der Schwerkraft S in eine zu der Schwerkraft S im Wesentlichen senkrechte Stellung geschwenkt wird. Nach dem Beladen des Fördergutaufnahmebereichs kann der Fördergutbehälter 1 in Transportrichtung von dem Plateau 24 gezogen werden, bis das erste Seitenwandelement 2 das Plateau verlässt. Dann bewirkt der Massenschwerpunkt 16 des zweiten Seitenwandelements 6, des Transportguts und des ersten Seitenwandelements 2, dass das in der Öffnungsstellung gegen die Transportrichtung gerichtete Ende des ersten Seitenwandelements 2 nach unten schwenkt und den Fördergutbehälter 1 in seine Transportstellung bringt. Zusätzlich können ggf. äußere Kräfte auf den Fördergutbehälter 1 ausgeübt werden, um ihn manuell oder ggf. automatisch zu schließen. Durch einen Übergang auf ein zweites Gefälle 23 kann der Fördergutbehälter 1 durch die Schwerkraft in Transportrichtung T weiter gefördert werden.

Es sei an dieser Stelle darauf hingewiesen, dass Fig. 5 nur ein willkürliches Beispiel einer Streckenführung einer Hängefördereinrichtung mit Hängetaschen nach der Erfindung darstellt und dass hinsichtlich der Förderstreckenarchitektur zahlreiche andere vorteilhafte Möglichkeiten nutzbar sind. Es können dabei unterschiedlich große Beladezonen, Entladezonen oder/und kombinierte Be-/Entladezonen vorgesehen sein.

Ferner ist darauf hinzuweisen, dass die Hängetaschen 1 in den betreffenden Ausführungsformen der Hängefördereinrichtung in der Weise an einer Führungsschiene angehängt sein können, dass sie um eine quer zur Schwenkachse 15, insbesondere vertikal verlaufende Achse drehbar sind. So besteht die Möglichkeit, das Öffnungsmaul 64 auch seitlich zur Transportrichtung oder ggf. schräg dazu auszurichten, so dass ggf. auf diese Weise der Beladevorgang oder/und Entladevorgang erleichtert werden kann.

Selbstverständlich können bei Bedarf auch mehrere Fördergutgegenstände in einer Hängetasche geladen und schützend transportiert werden. Auch besteht die Möglichkeit, unterschiedlich große Hängetaschen nach der Erfindung in einer Hängefördereinrichtung vorzusehen.

Besonders lange Fördergutgegenstände können zumindest in einigen Ausführungsformen einer Hängetasche nach der Erfindung auch so transportiert werden, dass sie in Transportstellung über den oberen Rand der Taschenseitenwände hinausragen.

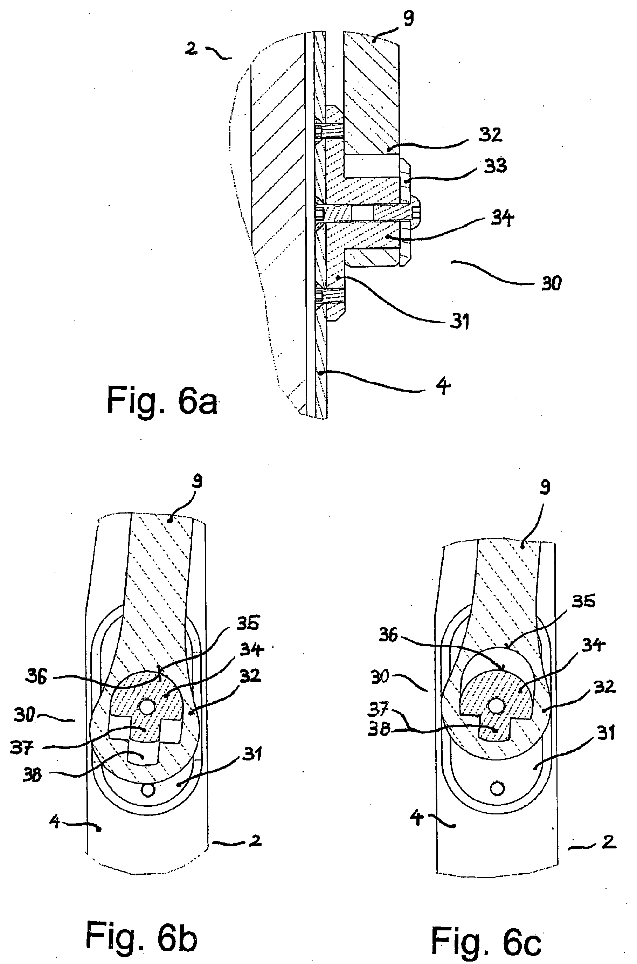

Fig. 6a zeigt eine Ausführungsform einer Positionsarretiereinrichtung 30, mit der das Seitenwandelement 2 relativ zu dem Anhängmittel 9, d. h. in Bezug auf eine Schwenkbewegung, arretierbar ist. Die Positionsarretiereinrichtung 30 umfasst ein Achselement 31, das an dem Randabschnitt 4 des ersten Seitenwandelements 2 befestigt, vorzugsweise verschraubt ist, einen Endabschnitt 32 des Anhängmittels 9 sowie eine Fixierplatte 33, die mit dem Achselement 31 verschraubt ist. Der Endabschnitt 32 des Anhängmittels 9 ist als Auge ausgebildet, in dessen Inneren ein Achsabschnitt 34 des Achselements 31 schwenkbar angeordnet ist. Das Achselement 31 weist vorzugsweise Gewindebohrungen auf, in das Schrauben zur Befestigung an dem Randabschnitt 4 sowie zur Befestigung der Fixierplatte 33 eingerichtet sind.

Fig. 6b zeigt in einem Querschnitt, der quer zu dem Querschnitt in der Fig. 6a angeordnet ist, die Ausführungsform der Positionsarretiereinrichtung 30 in Fig. 6a in einer nicht arretierten Stellung. In Fig. 6b ist der Endabschnitt 32 des Anhängmittels 9 in seiner Ausgestaltung als Auge, das den Achsabschnitt 34 des Achselements 31 umgreift, gut zu erkennen. Das Auge des Endabschnitts 32 weist an seinem Innenumfang einen Anlageabschnitt 35 mit kreisringförmigem Querschnitt auf. Ein Anlageabschnitt 36 am Umfang des Achsabschnitts 34 weist ebenalls einen kreisringförmigen Querschnitt auf. In einer nicht arretierten Stellung der Positionsarretiereinrichtung 30 liegen die Anlageabschnitte 35 und 36 aneinander an. Sie weisen vorzugsweise im Wesentlichen denselben Radius des kreisringförmigen Querschnitts auf. An einem dem kreisringförmigen Anlageabschnitt 36 des Achsabschnitts 34 abgewandten Umfangsabschnitt des Achsabschnitts 34 ist ein Vorsprung 37 vorgesehen. Der Innenumfang des Auges des Endabschnitts 32 des Anhängmittels 9 weist eine Aussparung 38 auf. Der Vorsprung 37 ist dazu geeignet, in die Aussparung 38 einzugreifen und dadurch ein erhebliches Schwenken des Anhängmittels 9 gegenüber dem Seitenwandelement 2 zu verhindern. In der in Fig. 6b gezeigten nicht arretierten Stellung greift der Vorsprung 37 jedoch nicht in die Aussparung 38 ein. Das Auge in dem Endabschnitt 32 ist in Längsrichtung des Anhängmittels 9 etwas langgestreckt ausgeführt, so dass der Achsabschnitt 34 im Inneren des Auges verschieblich ist. Auf diese Weise kann ein Eingreifen oder Außer-Eingriff-Treten des Vorsprungs 37 mit der Aussparung 38 bewirkt werden. Dazu ist das Anhängmittel 9 in Richtung seiner Längsachse in Bezug auf das Seitenwandelement 2 verschieblich, wobei sich der Achsabschnitt 34 in dem Auge des Endabschnitts 32 bewegt.

Fig. 6c zeigt im gleichen Querschnitt wie Fig. 6b die in den Fig. 6a und 6b gezeigte Ausführungsform der Positionsarretiereinrichtung 30 in einer verriegelten Stellung. Dabei ist der Vorsprung 37 in die Aussparung 38 eingetaucht, so dass sich beide überlappen. Eine Schwenkbewegung zwischen dem Anhängmittel 9 und dem ersten Seitenwandelement 2 wird dadurch verhindert. Im Vergleich zu der Fig. 6b ist das Anhängmittel 9 in Fig. 6c in seiner Längsrichtung in Bezug auf das Seitenwandelement 2 verschoben. Dadurch berühren sich die Anlageabschnitte 35 und 36 nicht mehr, während der Vorsprung 37 und die Aussparung 38 in Eingriff treten. Dies ist aufgrund der Orientierungen des Vorsprungs 37 und der Aussparung 38 in der Transportstellung möglich. In alternativen Ausführungsformen können die Orientierungen auch so angeordnet sein, dass dies alternativ oder zusätzlich auch für eine oder mehrere Öffnungsstellungen möglich ist. Das Auge des Endabschnitts 32 lässt in diesem Fall eine entsprechende Beweglichkeit des Achsabschnitts 34 innerhalb des Auges zu.

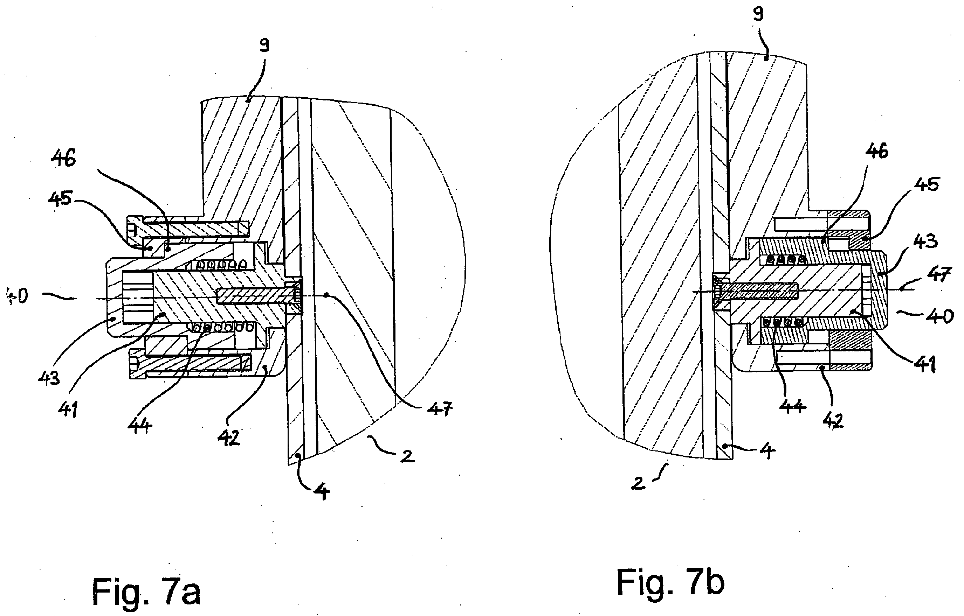

Fig. 7a zeigt eine weitere Ausführungsform einer Positionsarretiereinrichtung 40 in einem Querschnitt parallel zu einer Hauptebene des ersten Seitenwandelements 2 in einer arretierten Stellung. Die Positionsarretiereinrichtung 40 umfasst ein Achselement 41, das an dem Randabschnitt 4 des ersten Seitenwandelements 2 befestigt, vorzugsweise verschraubt ist. Das Achselement 41 ist von einem mit einem Auge versehenen Endabschnitt 42 des Anhängmittels 9 umgeben, wobei sich das Achselement 41 im Inneren des Auges befindet. Das Anhängmittel 9 ist um das Achselement 41 schwenkbar. Auf dem dem Randabschnitt 4 abgewandten Ende des Achselements 41 ist ein hutförmiger Knopf 43 aufgesteckt, wobei der Knopf 43 gegenüber dem Achselement 41 nicht verdrehbar, aber verschieblich befestigt ist. Ein Innenumfang des Knopfs 43 weist eine zu dem Außenumfang des Achselements 41 komplementäre Innenumfangsfläche auf. Die Außenumfangsfläche des Achselements 41 und die Innenumfangsfläche des Knopfs 43 sind so gestaltet, dass der Knopf 43 und das Achselement 41 im aufeinandergesteckten Zustand zueinander nicht verdrehbar sind. Dazu sind vorzugsweise Nuten und entsprechende Federn in jeweils einer von der Außenumfangsfläche des Achselements 41 und der Innenumfangsfläche des Knopfes 43 jeweils in einer Längsrichtung, in der die beiden Teile aufeinandergesteckt werden können, angeordnet. Die Verschraubung des Achselements 41 mit dem Randabschnitt 4 ist verdrehsicher ausgeführt, so dass der auf das Achselement 41 aufgesteckte Knopf 43 ebenfalls verdrehfest zu dem Randabschnitt 4 und somit zu dem Seitenwandelement 2 ist. Der Knopf 43 ist mit einem Federelement 44, das als Schraubenfeder oder dgl. ausgeführt sein kann, in eine dem Randabschnitt 4 abgewandte Richtung vorgespannt. Der Knopf 43 weist an seinem Außenumfang einen Absatz 46 auf. Der Absatz 46 verhindert eine völlige Entspannung des Federelements 44. Dazu liegt der Absatz 46 an einem Fixierring 45 an, der an dem Endabschnitt 42 des Anhängmittels 9 verdrehfest befestigt, vorzugsweise verschraubt ist. Die Anlagefläche zwischen dem Absatz 46 und dem Fixierring 45 ist komplementär zueinander und im Falle des Ineingrifftretens verdrehfest zueinander ausgeführt. Insbesondere kann der Absatz 46 kronenförmig oder quasi als Keilwelle auslaufend gestaltet sein. In dem Fixierring 45 sind Aussparungen angeordnet, die das Ende der Keilwelle bzw. die Zacken der Krone aufnehmen können und somit eine Arretierung gegenüber einer Schwenkbewegung bewirken. Es sei darauf hingewiesen, dass in der Fig. 7a der Absatz 46 unterhalb der Mittelachse 47 der Positionsarretiereinrichtung 40 weiter in Richtung des Randabschnitts 4 angeordnet ist als der oberhalb der Mittellinie 47 angeordnete Absatz 46, der eine Kronenzacke oder einen vorstehenden Teil des Keilwellenendes des Knopfes 43 darstellt. Die Anlagefläche für den Absatz 46 in dem Fixierring 45 ist für die Aufnahme der Zacke bzw. des Keilwellenendes geeignet ausgeformt. Vorzugsweise ist das dem Randabschnitt 4 abgewandte Ende des Knopfes 43 in einer nicht eingedrückten Stellung das am weitesten von dem Randabschnitt 4 entfernte Teil der Positionsarretiereinrichtung 40.

Fig. 7b zeigt die Positionsarretiereinrichtung 40 aus der Fig. 7a in demselben Querschnitt, jedoch gespiegelt und in einer nicht arretierten Stellung. Die Schrauben zur Befestigung des Fixierrings 45 sind weggelassen. Der Knopf 43 ist in Richtung des Randabschnitts 4 eingedrückt, so dass das Federelement 44 gespannt ist. Die vorstehenden Teile des kronenförmigen bzw. keilwellenförmigen Endes am Absatz 46 des Knopfes 43 sind dadurch außer Eingriff mit der ihnen zugeordneten Anlagefläche an dem Fixierring 45. Die Arretierwirkung zwischen dem Anhängmittel 9 und dem Seitenwandelement 2 ist somit aufgehoben, so dass das Anhängmittel 9 frei zu dem ersten Seitenwandelement 2 schwenkbar ist. Durch das Federelement 44 wird bewirkt, dass der Knopf 43 im unbetätigten Zustand eine Arretierungswirkung hat.

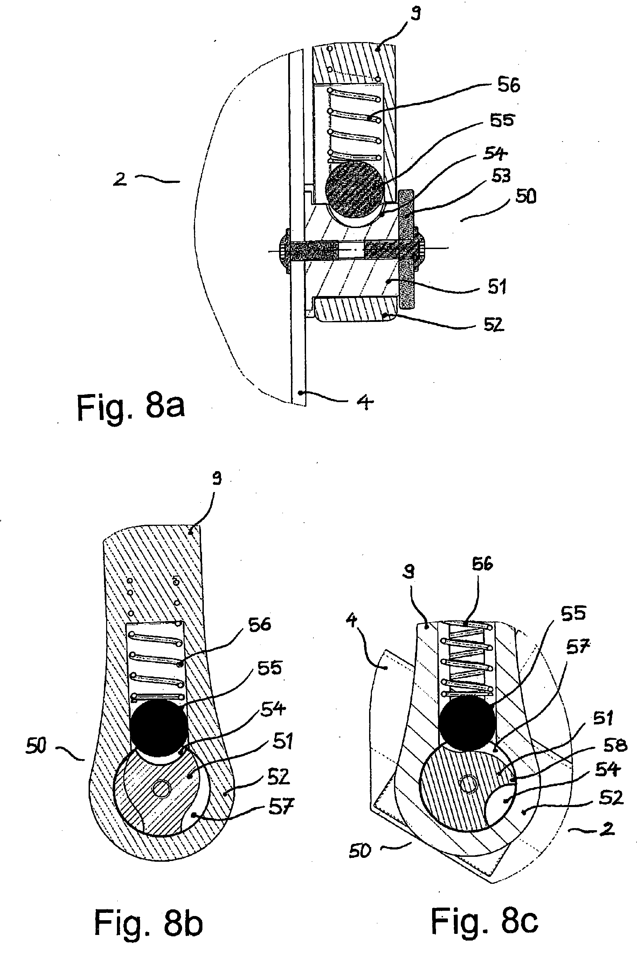

Fig. 8a zeigt eine weitere Ausführungsform einer Positionsarretiereinrichtung 50 in einem Querschnitt parallel zu der Hauptebene des Seitenwandelements 2 in einer arretierten Stellung. Die Positionsarretiereinrichtung 50 umfasst ein Achselement 51, das an dem Randabschnitt 4 des Seitenwandelements 2 verdrehfest befestigt ist, bevorzugt verschraubt ist. Das Achselement 51 ist in einem Auge eines Endabschnitts 52 des Anhängmittels 9 schwenkbar angeordnet. Zum Zwecke der Fixierung des Achselements 51 in dem Auge des Endabschnitts 52 ist an dem Achselement 51 eine Fixierplatte 53 befestigt. Durch diese wird ein Formschluss bewirkt, der verhindert, dass der Endabschnitt 52, der um dessen Auge herum angeordnet ist, sich von dem Achselement 51 entfernen kann. Der Außenumfang des Achselements 51 weist eine vorzugsweise kalottenförmige Aussparung 54 auf. In der in Fig. 8a gezeigten Stellung der Positionsarretiereinrichtung 50 greift eine Kugel 55 in die Aussparung 54 ein. Die Kugel 55 wird von einem Federelement 56, das vorzugsweise als Schraubenfeder ausgebildet ist, gegen die Aussparung 54 vorgespannt. Das Federelement 56 befindet sich dabei im Inneren des Anhängmittels 9. Das Federelement 56 stützt sich an dem Anhängmittel 9 ab, um die Vorspannung der Kugel 55 zu bewirken. Das Anhängmittel 9 kann auf seiner dem Seitenwandelement 2 zugewandten Seite an der Stelle, an der das Federelement 56 angeordnet ist, offen ausgeführt sein. Auf diese Weise werden das Federelement 56 und die Kugel 55 von einer Seite des Anhängmittels 9 her zugänglich, was deren Montage und/oder Wartung vereinfachen kann.

Fig. 8b zeigt dieselbe Ausführungsform der Positionsarretiereinrichtung 50 wie Fig. 8a in einem Querschnitt, der rechtwinklig zu dem in Fig. 8a gezeigten Querschnitt liegt. Die Positionsarretiereinrichtung 50 ist in einem Zustand gezeigt, in dem der Vorgang des Eingriffs der Kugel 55 in die Aussparung 54 fast beendet ist. Im vollendeten Arretierungszustand liegt die Kugel 55 an der Innenoberfläche der Aussparung 54 und/oder an deren Rand an. Der Innenumfang des Endabschnitts 52 des Anhängmittels 9 ist vorzugsweise kreisrund ausgeführt. Gegenüber einem kreisrunden Querschnitt weist der Außenumfang des Achselements 51, der sich im Inneren des Auges des Endabschnitts 52 befindet, vorzugsweise zusätzlich zu der Aussparung 54 eine am Umfang entlang verlaufende Ausnehmung 57 mit in Umfangsrichtung mit der Entfernung von der Aussparung 54 zunehmender Tiefe auf. In einer alternativen Ausführungsform kann auf die Ausnehmung 57 verzichtet werden. Die in der Fig. 8b dargestellte Relativposition von Achselement 51 und Anhängmittel 9 entspricht der Transportstellung des Fördergutbehälters 1. Bei Eingriff der Kugel 55 in die Aussparung 54 ist der Fördergutbehälter 1 somit in der Transportstellung arretiert.

Fig. 8c zeigt in derselben Querschnittsansicht wie Fig. 8b dieselbe Ausführungsform der Positionsarretiereinrichtung 50 in einer Öffnungsstellung des Fördergutbehälters 1. Im Gegensatz zu der in Fig. 8b gezeigten nahezu arretierten Stellung der Positionsarretiereinrichtung 50 befindet sich die Kugel 55 in der Öffnungsstellung des Fördergutbehälters 1 in der Ausnehmung 57. Um von der arretierten Stellung, in der die Kugel 55 in der Ausnehmung 57 angeordnet ist, zu der Öffnungsstellung überzugehen, muss die Kugel 55 einen Bereich 58 am Umfang des Achselements 51 überwinden, um von der Aussparung zu der Ausnehmung zu gelangen. Dabei wird das Federelement 56 komprimiert, so dass eine Kraft aufgewendet werden muss, um die arretierte Stellung zu verlassen. Hat die Kugel den Bereich 58 überwunden, so erreicht sie die Ausnehmung 57, die im weiteren Verlauf der Position der Kugel in deren Inneren bei weiterem Schwenken des Anhängmittels 9 in Bezug auf das erste Seitenwandelement 2 einen zunehmend geringeren Radius aufweist. Dadurch entspannt sich das Federelement 56 und setzt Energie frei, die die Bewegung des Fördergutbehälters 1 in dessen Öffnungsstellung unterstützt. An dem der Aussparung 54 abgewandten Ende der Ausnehmung 57 endet die Radiusabnahme der Ausnehmung 57. Aus der Positionsarretiereinrichtung 30 erhält der Fördergutbehälter 1 somit keinen weiteren Antrieb, sich zu bewegen, wenn die Kugel 55 diese Stelle erreicht. Zudem läuft die Kugel 55 schließlich an das der Aussparung 54 abgewandte Ende der Ausnehmung 57 an. Um dieses Ende zu überwinden, müsste die Kugel 55 gegen die Vorspannung des Federelements 56 aus der Ausnehmung 57 gedrückt werden. Dies bedeutet, dass die Stellung der Positionsarretiereinrichtung 50, an der sich die Kugel an dem der Aussparung 54 abgewandten Ende befindet, eine Energiesenke mit maximal entspanntem Federelement 56 und somit eine stabile Relativposition zwischen Anhängmittel 9 und erstem Seitenwandelement 2 bildet. Im Vergleich zu der zum Verlassen arretierten Position, in der sich die Kugel 55 in der Aussparung 54 befindet, ist die erforderliche Kraft für den Übergang in die Transportstellung bzw. arretierte Stellung erheblich geringer. Somit ist eine leichte Bedienung des Fördergutbehälters 1 beim Schließen in Richtung der Transportstellung möglich, in der der Fördergutbehälter 1 aufgrund der Arretierwirkung sicher gehalten wird. Es ist nicht erforderlich, eine gesonderte Betätigung der Positionsarretiereinrichtung 50 durchzuführen, um die Arretierung aufzuheben. Es reicht aus, eine ausreichend große Kraft auf das Anhängmittel 9 und das Seitenwandelement 2 aufzubringen.

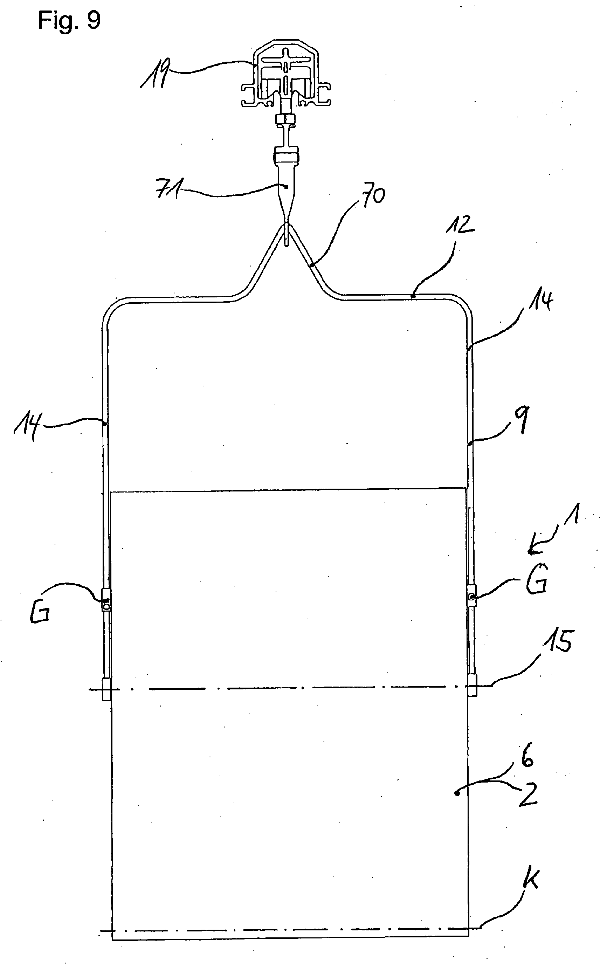

Figur 9 zeigt eine schematische Frontansicht eines weiteren Ausführungsbeispiels eines Fördergutbehälters 1 in einer vertikalen Schließstellung. Der Fördergutbehälter 1 besteht im Wesentlichen aus einem Klapphalterahmen 9 als Anhängemittel und einem ersten und einem zweiten Seitenwandelement 2, 6, die in der Ansichtsebene hintereinander liegen. Das erste und das zweite Seitenwandelement 2, 6 sind über eine Klappachse K drehbar miteinander verbunden. Der vorzugsweise bügelförmige Klapphalterahmen 9 umgreift mit seinen Schenkeln 14 die beiden Seitenwandelemente 2, 6. Der Klapphalterahmen 9 ist vorzugsweise aus einem Rohr oder einem Stab, vorzugsweise einem metallischen Rundrohr oder Rundstab, gebogen. Alternativ kann beispielsweise Kunststoff eingesetzt werden. Das erste Seitenwandelement 2 ist mit dem Klapphalterahmen 9 über eine Schwenkachse 15 drehbar verbunden. Der Klapphalterahmen 9 ist mit dem zweiten Seitenwandelement 6 über eine Gelenkverbindungsanordnung G verbunden, die als zwei Einzelgelenke auf beiden Seiten des zweiten Seitenwandelements 6 realisiert ist. Die Gelenkverbindungsanordnung G ist in dieser Ausführungsform drehbar mit dem zweiten Seitenwandelement 6 und verschieblich mit dem Klapphalterahmen 9 verbunden. Die Schenkel 14 des Klapphalterahmens 9 sind mit einem Rahmenmittenbereich 12 des Klapphalterahmens 9 verbunden. Die Schenkel 14 sind bevorzugt gerade und parallel zueinander ausgeführt. Vorzugsweise bilden sie eine Komponente einer Führung für die Gelenkverbindungsanordnung G, die jeweils die Schenkel 14 des Klapphalterahmens 9 umschließt, so dass sie auf den Schenkeln entlanggleiten kann. Der Klapphalterahmen 9 weist an seinem oberen Ende eine gebogene Aufnahmenase 70 auf, die nach oben herausragt. In die Aufnahmenase 70 greift ein Haken eines Fördermittels 71 einer Hängefördereinrichtung ein, welches in einer Führungsschiene 19 verschieblich angeordnet ist.

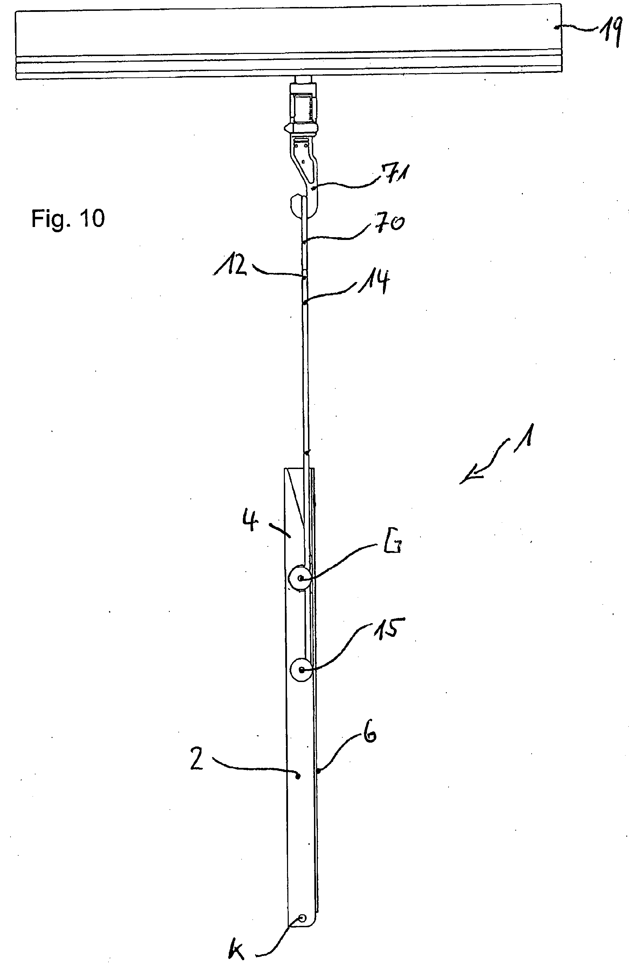

Figur 10 zeigt eine schematische Seitenansicht des Fördergutbehälters 1 in einer vertikalen Schließstellung. In dieser Stellung liegt das zweite Seitenwandelement 6 bevorzugt in dem ersten Seitenwandelement 2 und vorzugsweise wenigstens annähernd parallel zu diesem. Das erste Seitenwandelement 2 ist im Wesentlichen plattenförmig mit umgebogenen Randbereichen 4 ausgebildet, von denen einer in der Figur 10 in der Ansichtsebene mit im wesentlichen vertikaler Ausdehnung zu sehen ist. Hinter dem umgebogenen Randbereich 4 liegt im Inneren des ersten Seitenwandelements 2 das zweite Seitenwandelement 6. An der mit der Bezugsziffer 15 bezeichneten Stelle des umgebogenen Randbereiches des ersten Seitenwandelements 2 ist der Randbereich 4 mit einem Ende eines Schenkels 14 des Klapphalterahmens 9 schwenkbar verbunden, so dass mit 15 die Lage der Schwenkachse angegeben ist. Auf der Seite des Fördergutbehälters 1, die von der Ansichtsebene abgewandt ist, ist eine identische Ausgestaltung vorgesehen, so dass die beiden drehbaren Verbindungsstellen gemeinsam die Schwenkachse 15 darstellen. Der Schenkel 14 verläuft von der Schwenkachse 15 verschieblich durch die Gelenkverbindungsanordnung G. Die Gelenkverbindungsanordnung G ist mit dem innenliegenden zweiten Seitenwandelement 6 verbunden und liegt vorzugsweise in einer Aussparung in dem umgebogenen Randbereich des ersten Seitenwandelements 2. Auf diese Weise kann der Schenkel 14 des Klapphalterahmens 9 außerhalb des ersten Seitenwandelements 2 angeordnet sein.

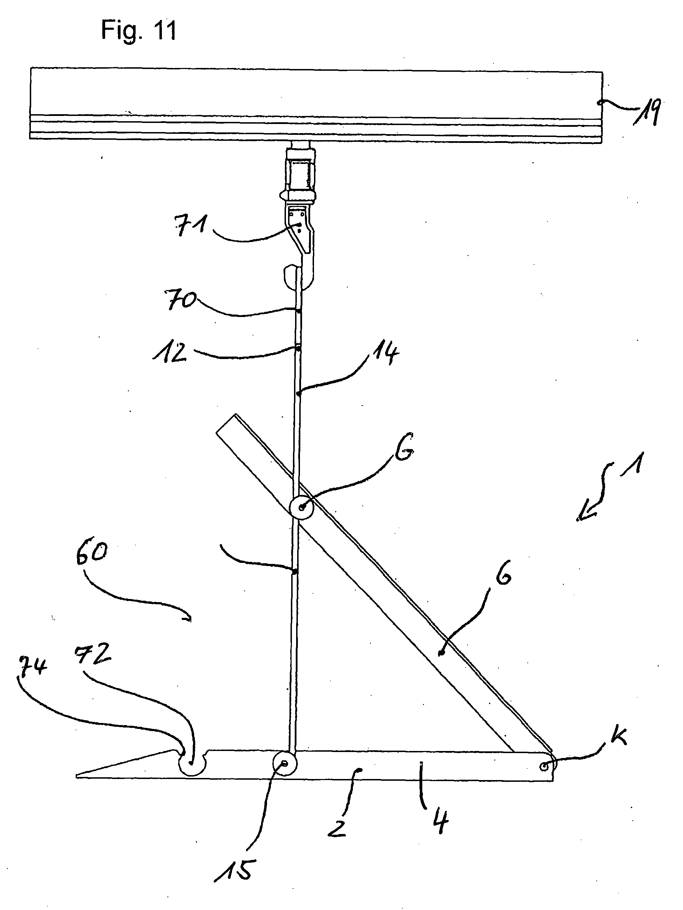

Figur 11 zeigt eine schematische Seitenansicht der Ausführungsform des Fördergutbehälters 1 aus Fig. 9 -10 in einer Beladestellung, in der das erste Seitenwandelement 2 in einer zumindest annähernd horizontalen Position steht. Die Klappachse K und die Schwenkachse 15 befinden sich auf gleicher Höhe. Das zweite Seitenwandelement 6 steht unter einem Öffnungswinkel zu dem ersten Seitenwandelement 2, wodurch sich ein Fördergutaufnahmebereich 60 zwischen den beiden Seitenwandelementen 2, 6 ergibt. Der Schenkel 14 des Klapphalterahmens 9 steht in dieser Position vorzugsweise zumindest annähernd senkrecht zu dem ersten Seitenwandelement 2. Die Gelenkverbindungsanordnung G gleitet von der Schließposition kommend entlang eines Abschnitts des Schenkels 14 in Richtung der Aufnahmenase 70. Im Vergleich zu der Schließposition, in der der Schenkel 14 des Klapphalterahmens 9 und das zweite Seitenwandelement 6 parallel angeordnet sind, liegen diese beiden Elemente in der in Figur 11 gezeigten Beladeposition unter einem Winkel zueinander. Diese Drehbewegung wird durch die Gelenkverbindungsanordnung G ausgeglichen. Der gemeinsame Schwerpunkt des zweiten Seitenwandelements 6 und des ersten Seitenwandelements 2 liegt in dieser Stellung zwischen der Klappachse K und der Schwenkachse 15. Um die gezeigte Stellung zu erhalten, ist daher zum Beispiel eine Kraft erforderlich, die das erste Seitenwandelement 2 zwischen der Klappachse K und der Schwenkachse 15 von unten unterstützt. Wird eine solche Kraft weggenommen, fällt der Fördergutbehälter 1 in die in Figur 10 gezeigte Schließstellung zurück. Dabei kehrt die Gelenkverbindungsanordnung G in eine Aussparung 72 in dem umgebogenen Randbereich 4 des ersten Seitenwandelements 2 zurück, wo es vorzugsweise an einer Haltenase 74 verrastet. Dann ist eine Verrastungslösekraft erforderlich, um den Fördergutbehälter 1 aus seiner Schließstellung wieder zu öffnen.

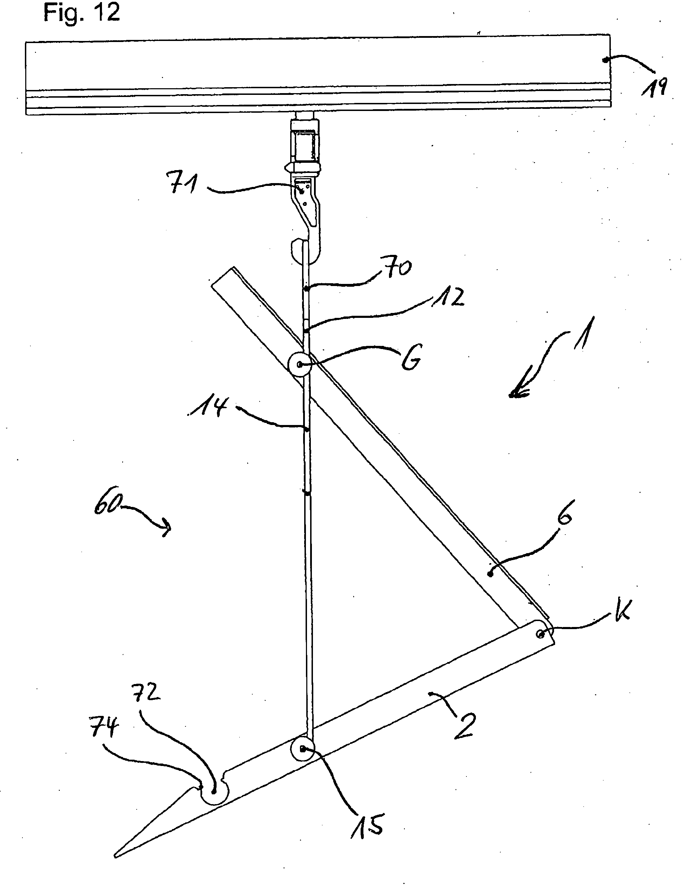

In Figur 12 ist der Fördergutbehälter 1 in einer schematischen Seitenansicht in einer Entladestellung gezeigt. Das erste Seitenwandelement 2 ist gegenüber der Horizontalen geneigt, so dass Fördergüter, die sich auf dem ersten Seitenwandelement 2 befinden, von diesem herunterrutschen können. Dabei befindet sich die Klappachse K in einer höheren Position als die Schwenkachse 15. Im Vergleich zu der in Figur 11 gezeigten Beladestellung ist der Fördergutaufnahmebereich 60 noch besser zugänglich, da der Öffnungswinkel zwischen dem zweiten Seitenwandelement 6 und dem ersten Seitenwandelement 2 weiter vergrößert ist. Die Gelenkverbindungsanordnung G befindet sich in einer noch höheren Position auf dem Schenkel 14 des Klapphalterahmens 9. In einer Ausführungsvariante liegt die Oberseite des zweiten Seitenwandelements 6 an dem Rahmenmittenbereich des Klapphalterahmens 9 an, der die beiden Schenkel 14 verbindet. Auf diese Weise bildet der Rahmenmittenbereich des Klapphalterahmens 9 einen Anschlag für die Öffnung des Fördergutbehälters 1. Wie in der Beladestellung ist auch in der Entladestellung aufgrund der Lage des Schwerpunkts der beiden Seitenwandelemente 2, 6 beispielsweise eine von unten wirkende Kraft zwischen der Klappachse K und der Schwenkachse 15 erforderlich, um den Fördergutbehälter 1 in der Entladestellung zu halten. Wird diese Kraft weggenommen, fällt der Fördergutbehälter 1 über die Beladestellung in die Schließstellung zurück.

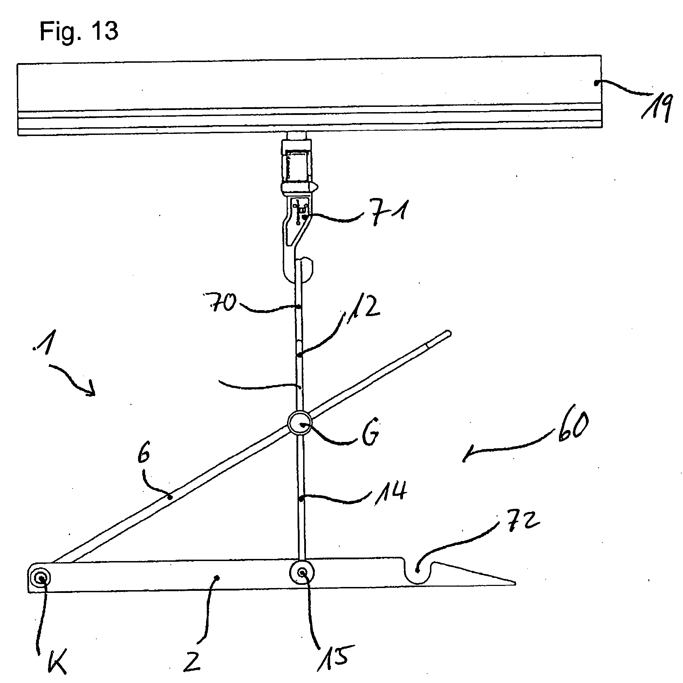

Figur 13 zeigt eine schematische Seitenansicht einer weiteren Ausführungsform des Fördergutbehälters 1 in einer Beladestellung. Gleiche Elemente wie in den vorausgehend beschriebenen Ausführungsformen sind mit gleichen Bezugszeichen bezeichnet und werden nicht noch einmal gesondert beschrieben. Figur 13 entspricht im Wesentlichen Figur 11, und es wird im Folgenden auf die Unterschiede zwischen diesen beiden Figuren eingegangen. In Figur 11 ist die Gelenkverbindungsanordnung G an dem zweiten Seitenwandelement 6 fixiert und kann entlang des Schenkels 14 des Klapphalterahmens 9 gleiten. Dagegen ist in der in Figur 13 gezeigten Ausführungsform die Gelenkverbindungsanordnung G an dem Schenkel 14 des Klapphalterahmens 9 befestigt und kann entlang des zweiten Seitenwandelements 6 gleiten. Zugleich kann die Gelenkverbindungsanordnung G Winkelveränderungen zwischen dem Schenkel 14 des Klapphalterahmens 9 und dem zweiten Seitenwandelement 6 ausgleichen. In einem Ausführungsbeispiel kann in dem in der Ansichtsebene liegenden Rand des zweiten Seitenwandelements 6 eine Nut ausgebildet sein, in der ein Abschnitt der Gelenkverbindungsanordnung G gleiten kann, so dass auf diese Weise eine Führung verwirklicht ist. Der Abschnitt der Gelenkverbindungsanordnung G ist vorzugsweise als Stift mit einem runden Querschnitt ausgeführt. In einem alternativen Ausführungsbeispiel kann ein Element der Gelenkverbindungsanordnung G den Rand des zweiten Seitenwandelements 6 umgreifen und auf diese Weise eine Führung ausbilden. Beim Übergang in eine Schließstellung, die im Wesentlichen der in Figur 10 gezeigten Stellung entspricht, gleitet die Gelenkverbindungsanordnung G entlang des Randes des zweiten Seitenwandelements 6 in Richtung von dessen der Klappachse K abgewandtem Ende, während sich gleichzeitig das erste Seitenwandelement 2 der Vertikalen annähert. Bei Erreichen der Schließstellung gereift die Gelenkverbindungsanordnung G in die Aussparung 72 in dem umgebogenen Rand des ersten Seitenwandelements 2 ein. Die Aussparung 72 hat von der Schwenkachse 15 denselben Abstand, den die Gelenkverbindungsanordnung G von der Schwenkachse 15 hat.

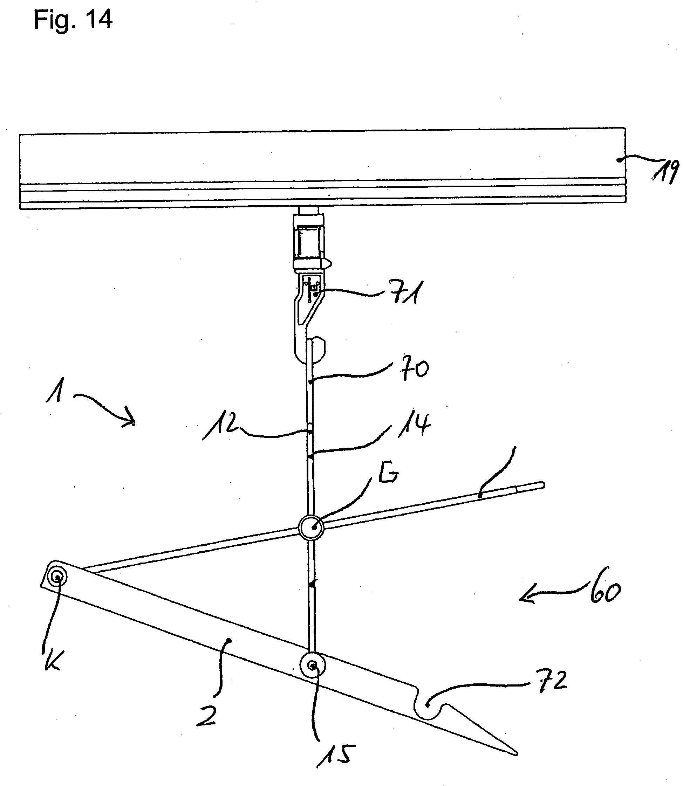

Figur 14 zeigt schematisch eine Seitenansicht der Ausführungsform des Fördergutbehälters 1 aus Figur 13 in einer Entladestellung. Das erste Seitenwandelement 2 ist gegenüber der Horizontalen gekippt, so dass darauf befindliche Fördergüter von diesem herunterrutschen können. Dabei liegt die Klappachse K höher als die Schwenkachse 15. Die Gelenkverbindungsanordnung G befindet sich in einer Position auf dem zweiten Seitenwandelement 6, die weiter in Richtung der Klappachse K liegt als im Vergleich zu ihrer Position in der Beladestellung, die in Figur 13 gezeigt ist. Der Abstand zwischen der Gelenkverbindungsanordnung G und der Schwenkachse 15 ist unverändert.

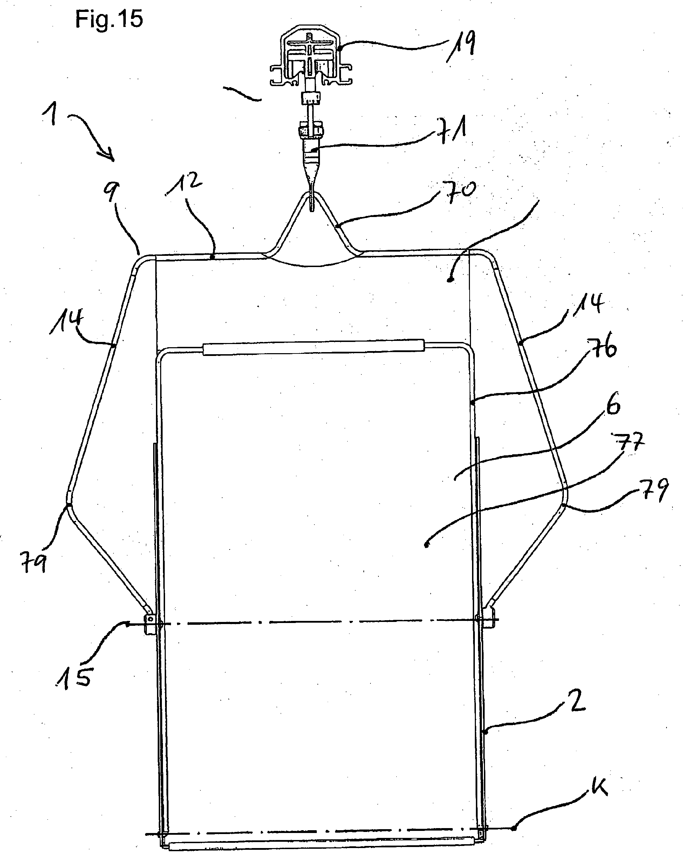

Figur 15 zeigt eine schematische Frontansicht einer weiteren Ausführungsform des Fördergutbehälters 1 in einer Schließstellung. Gleiche Elemente wie in den vorangehend beschriebenen Ausführungsformen sind mit gleichen Bezugsziffern bezeichnet. Im Folgenden werden nur Abweichungen davon gesondert beschrieben. In der gezeigten Schließstellung sind das zweite Seitenwandelement 6, das erste Seitenwandelement 2 und der Klapphalterahmen 9 im Wesentlichen in vertikaler Richtung angeordnet. Das zweite Seitenwandelement 6 umfasst einen Rahmen 76. Der Rahmen 76 ist in seinem Inneren vorzugsweise mit einer Bespannung 77 versehen. Bevorzugt ist die Bespannung 77 des zweiten Seitenwandelements 6 mit einem Endabschnitt des ersten Seitenwandelements 2 verbunden, an dem die Klappachse K angeordnet ist. Dadurch können Fördergüter in der Schließstellung nicht nach unten aus dem Fördergutbehälter 1 fallen. Besonders bevorzugt ist die Bespannung 77 als Verbindungsabschnitt zwischen dem oberen Rand des Rahmens 76 und dem Rahmenmittenbereich 12 des Klapphalterahmens 9 fortgesetzt. Die als Verbindungsabschnitt fortgesetzte Bespannung 77 ist mit dem Rahmenmittenbereich 12 des Klapphalterahmens 9 verbunden. Der Bereich der Aufhängenase 70 ist von der Befestigung des Verbindungsabschnitts ausgespart. Vorzugsweise ist der Verbindungsabschnitt mit dem oberen Rand des Rahmens 76 nicht verbunden, sondern nur auf diesen aufgelegt. Das erste Seitenwandelement 2 ist als Tablett ausgeführt, bei dem an den Seiten, die den Schenkeln 14 des Klapphalterahmens 9 zugewandt sind, seitliche Randbereiche umgebogenen sind. In diesen seitlichen Randbereichen ist vorzugsweise die Klappachse K realisiert, indem die beiden Enden des Rahmens in Richtung des Äußeren des Fördergutbehälters 1 abgewinkelt und durch Löcher in den Randbereichen des ersten Seitenwandelements 2 gesteckt sind. Vorzugsweise ist auch ein in der Figur 15 unten dargestellter Randbereich des ersten Seitenwandelements 2 umgebogen ausgeführt und schließt sich an die seitlichen umgebogenen Randbereiche an. Der Klapphalterahmen 9 ist mit geknickten Schenken 14 ausgeführt. Diese stehen in einem Ausführungsbeispiel von den seitlichen Randbereichen in Richtung des Äußeren des Fördergutbehälters 1 ab. Die größte Entfernung von den seitlichen Randbereichen hat eine Knickstelle 79 in den Schenkeln 14. Die Schwenkachse 15 ist bevorzugt an den jeweiligen Enden der Schenkel 14 angeordnet. Die Abschlusselemente verhindern, dass der Klapphalterahmen 9 an dem Randbereich des ersten Seitenwandelements 2 reibt. In einem weiteren Ausführungsbeispiel ist das Ende der Schenkel 14 in Richtung des Inneren des Fördergutbehälters 1 abgewinkelt und jeweils durch eine Öffnung in einem der seitlichen umgebogenen Randbereiche des ersten Seitenwandelements 2 gesteckt, um die Schwenkachse 15 zu realisieren.

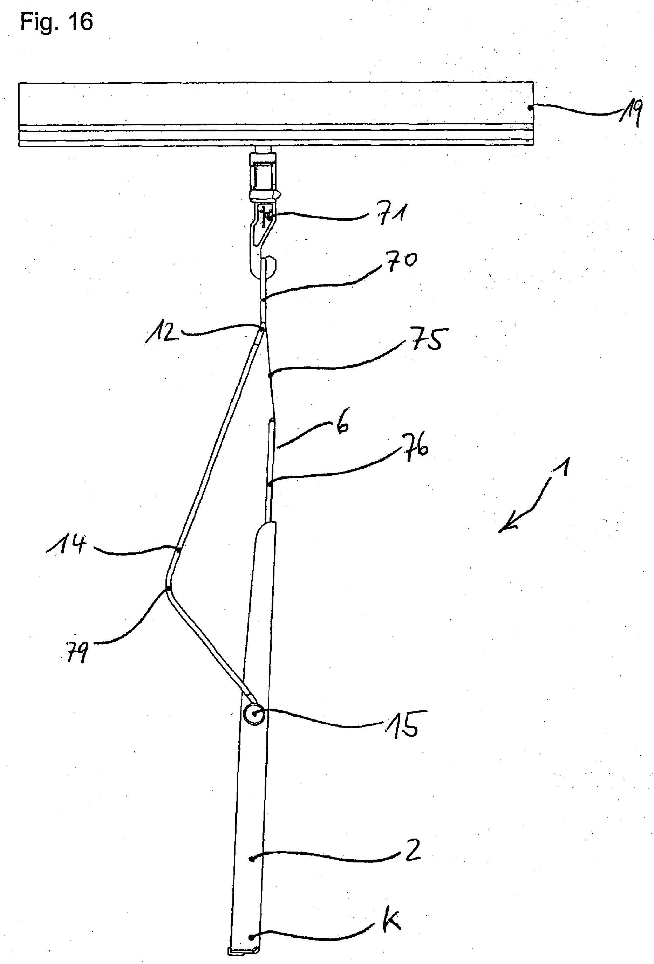

Figur 16 zeigt schematisch eine Seitenansicht des Fördergutbehälters 1 aus Figur 15 in einer Schließstellung. Die Figur entspricht in einigen Details der Figur 10. Es wird im Folgenden auf die Unterschiede zu dieser Figur eingegangen. Im Gegensatz zu der Ausführungsform des Fördergutbehälters 1 nach Figur 10 weist die Ausführungsform in Figur 16 keine Gelenkverbindungsanordnung G auf. Deren Funktion wird durch den Verbindungsabschnitt 75 ersetzt. Der Verbindungsabschnitt 75 verbindet das obere Ende des Rahmens 76 des zweiten Seitenwandelements 6 mit dem Rahmenmittenbereich 12 des Klapphalterahmens 9, wobei sich die genannten Abschnitte der verbundenen Elemente durch die Beweglichkeit des Verbindungsabschnitts 75 zueinander verdrehen und verschieben können.

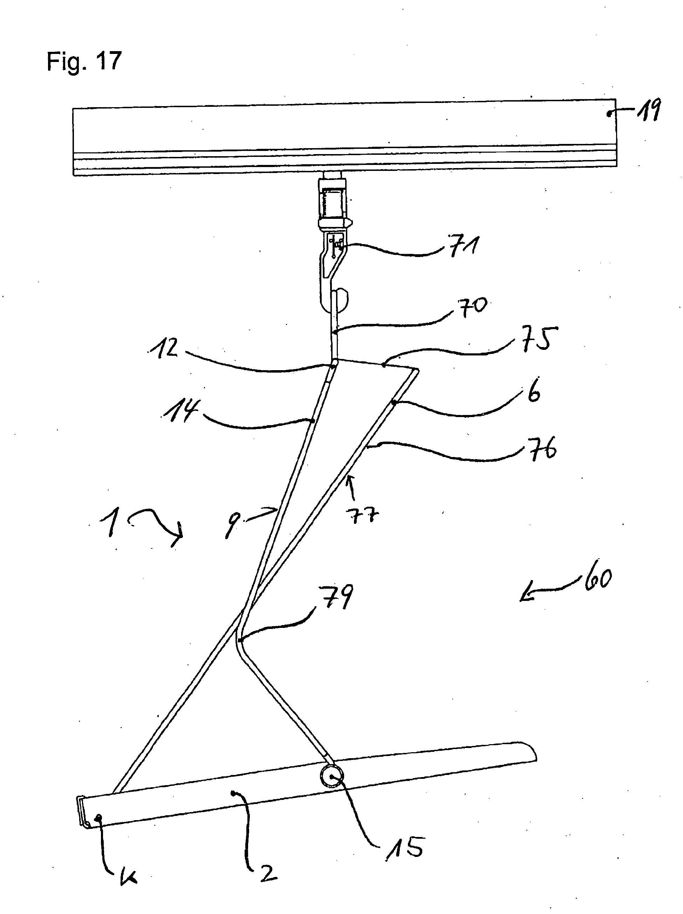

Figur 17 zeigt eine schematische Darstellung der Ausführungsform des Fördergutbehälters 1 aus Figur 16 in einer Beladestellung. Das erste Seitenwandelement 2 befindet sich in einer annähernd horizontalen Stellung, so dass Fördergut auf dem ersten Seitenwandelement 2 abgelegt werden kann. Alternativ kann das erste Seitenwandelement 2 in der Beladestellung einen steileren Winkel aufweisen, bei dem die Klappachse K gegenüber der Schwenkachse 15 weiter abgesenkt ist, so dass auf das erste Seitenwandelement 2 abgelegte Fördergüter in Richtung der Klappachse K in den hinteren/unteren Teil des Fördergutaufnahmebereichs 60 gleiten. Durch das Öffnen des Fördergutbehälters 1 und dem damit verbundenen Anheben der Klappachse K geht auch eine Positionsverlagerung des oberen Randes des Rahmens 76 einher. In einer in der Figur 17 dargestellten Beladungsvariante des Fördergutbehälters 1 überkreuzt der Rahmen 76 des zweiten Seitenwandelements 6 dabei den Klapphalterahmen 9. Das obere Ende des Rahmens 76 ist dann weiter in Richtung des offenen Endes des ersten Seitenwandelements 2 gerichtet als der Rahmenmittenbereich 12 des Klapphalterahmens 9. Eine Bespannung 77 des Rahmens 76 und der Verbindungsabschnitt 75 werden von dem oberen Rand des Rahmens 76 in ihrer Position gehalten. In einer weiteren, nicht dargestellten Beladungsvariante kreuzt der Rahmen 76 des zweiten Seitenwandelements 6 den Klapphalterahmen 9 nicht. Das obere Ende des Rahmens 76 ist dabei weiter in Richtung der Klappachse K gerichtet als der Rahmenmittenbereich 12 des Klapphalterahmens 9. Die Bespannung 77 des Rahmens 76 und der Verbindungsabschnitt 75 werden dabei von dem Rahmen 76 nicht gespannt. Der Rahmen 76 liegt dann leicht oder nicht an der Bespannung 77 an. Der Knick 79 in den Schenkeln 14 des Klapphalterahmens 9 bewirkt eine bessere Zugänglichkeit des Fördergutaufnahmebereichs 60. Der gemeinsame Schwerpunkt des ersten und des zweiten Seitenwandelements 2, 6 liegt in Bezug auf die Schwenkachse 15 auf der Seite der Klappachse K, so dass der Fördergutbehälter 1 ohne Kräfte, die ihn in der Beladestellung halten, zu der Schließstellung zurückkehrt.

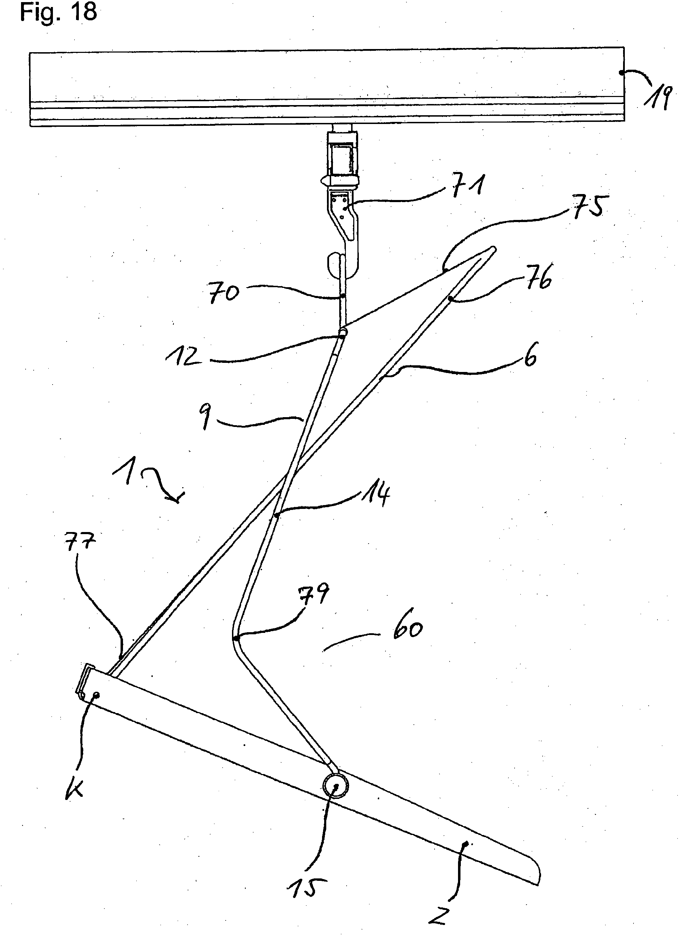

Figur 18 zeigt eine schematische Darstellung des Fördergutbehälters 1 aus Figur 17 in einer Entladestellung. Durch die Verbindung des Rahmens 76 des zweiten Seitenwandelements 6 mit der Klappachse K wird auch das obere Ende des Rahmens 76 im Vergleich zu der Öffnungsstellung weiter nach oben gedrückt. Dies führt zu einer Dehnung des Verbindungsabschnitts 75 sowie der damit verbundenen Bespannung 77, die vorzugsweise entsprechend elastisch ausgeführt ist. Die damit verbundene Spannung der Bespannung 77 bewirkt eine Tendenz des Fördergutbehälters 1, in eine Position in Richtung der Schließstellung zurückzukehren. Die Position, in die die Spannung in der Bespannung 77 den Fördergutbehälter 1 treibt, hängt von der Länge der Bespannung 77 ab. Je nach der Länge der Bespannung 77 ist die Bespannung 77 ab einer bestimmten Position entspannt, so dass sie ab dort keinen Beitrag zu einer Positionsveränderung mehr leistet. Zusätzlich liegt der Schwerpunkt der Seitenwandelemente 2, 6 in Bezug auf die Schwenkachse 15 in Richtung der Klappachse K, so dass auch dies bei Wegfall von entsprechenden Haltekräften dazu führt, dass der Fördergutbehälter 1 in seine Beladestellung oder seine Schließstellung zurückkehrt. Zusätzlich kann das Zurückkehren in die Schließstellung durch ein nicht dargestelltes langgestrecktes Federelement, vorzugsweise in Form eines S-förmigen Stücks Federbandstahl, unterstützt werden. Ein solches Federelement kann an einem Ende nahe der Klappachse K und an seinem anderen Ende an dem Rahmenmittenbereich 12 des Klapphalterahmens 9 befestigt werden. Dabei ist vorzugsweise die eine Vorkrümmung des Federelements im Bereich der Klappachse mit dem Krümmungsbauch in Richtung des Fördergutaufnahmebereichs 60 gerichtet. Durch Bewegen des ersten Seitenwandelements 2 von der Schließstellung in die Beladestellung oder die Entladestellung nähert sich die Klappachse K dem Rahmenmittenbereich 12 des Klapphalterahmens 9 an. Dadurch wird das Federelement gestaucht, was im Falle der Ausgestaltung mit einer Vorkrümmung zu einer Vergrößerung der Bauchigkeit führt. Die Spannung in dem Federelement führt dazu, dass der Fördergutbehälter 1 die Tendenz hat, in seine Schließstellung zurückzukehren. Vorzugsweise liegt auf dem Federelement die Bespannung 77 auf, so dass diese nicht oder weniger stark in den Fördergutaufnahmebereich 60 hängt.

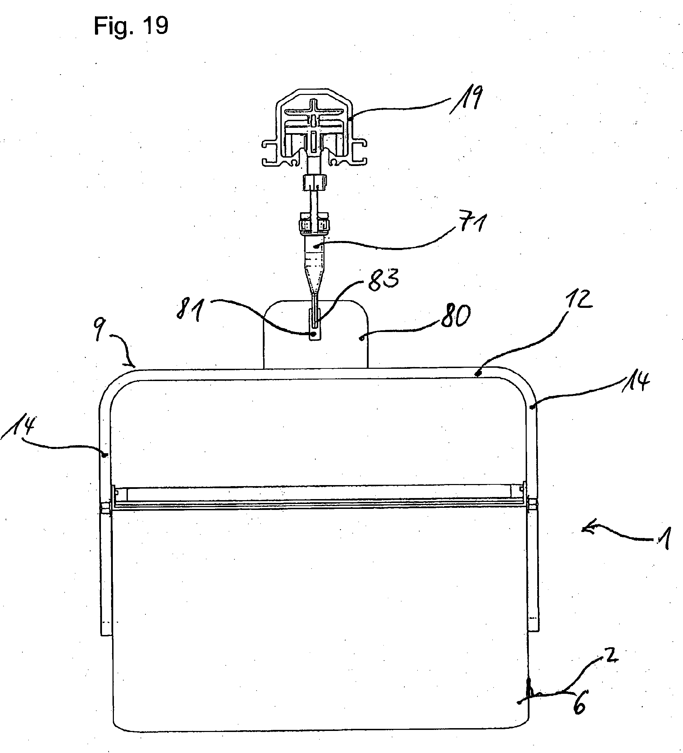

Figur 19 zeigt schematisch eine Frontansicht einer weiteren Ausführungsform eines Fördergutbehälters 1. Diese weitere Ausführungsform kann mit allen anderen beschriebenen Ausführungsformen kombiniert werden. Figur 19 zeigt einige ähnliche Merkmale und Elemente wie die Figur 9, die mit denselben Bezugszeichen beziffert sind und hier nicht noch einmal detailliert beschrieben werden. In Figur 19 weist der Fördergutbehälter 1 eine Lasche 80 mit einer Öffnung 81 auf. Die Lasche 80 ist an dem Rahmenmittenbereich 12 des Klapphalterahmens 9 befestigt, wobei die Lasche 80 vorzugsweise mittig befestigt ist. Die Öffnung 81 ist mit einem rechteckigen Profil ausgestaltet. Vorzugsweise ist die Abmessung der Öffnung in Höhenrichtung größer als die Abmessung in Breitenrichtung. In die Öffnung 81 greift ein Haken 83 des Fördermittels 71 ein, wodurch der Fördergutbehälter 1 in die Führungsschiene 19 eingehängt ist. Vorzugsweise hat der Haken 83 in seinem gebogenen Bereich einen rechteckigen Querschnitt. Vorzugsweise entspricht dieser Querschnitt bis auf eine vorzugsweise großzügig bemessene Toleranz einer Spielfassung den Abmessungen der Öffnung 81. Durch den rechteckigen Querschnitt bzw. die rechteckige Öffnung und/oder durch die in Höhenrichtung größeren Abmessungen als in Breitenrichtung sind die Lasche 80 und der Haken 83 in der Ebene des ersten und des zweiten Seitenwandelements 2, 6 in der Schließstellung nur begrenzt zueinander verdrehbar. Dies hat zur Folge, dass der Fördergutbehälter 1 in Kurven der Hängefördereinrichtung 19 durch Fliehkraft nicht nach außen getragen wird.

In den Ausführungsbeispielen gemäß den Figuren 1 - 19 sind die behälterinnenseitigen Flächen der Seitenwandelemente 2, 6 bzw. des Fördergutbehälters 1 im unbelasteten Zustand im Wesentlichen eben dargestellt. Gemäß Weiterbildungen der Erfindung ist zumindest die behälterinnenseitige Fläche eines der Seitenwandelemente 2, 6 und vorzugsweise des ersten Seitenwandelementes 2 mit einer Struktur aus Erhebungen und Senken, z. B. einer Noppenstruktur ausgebildet.

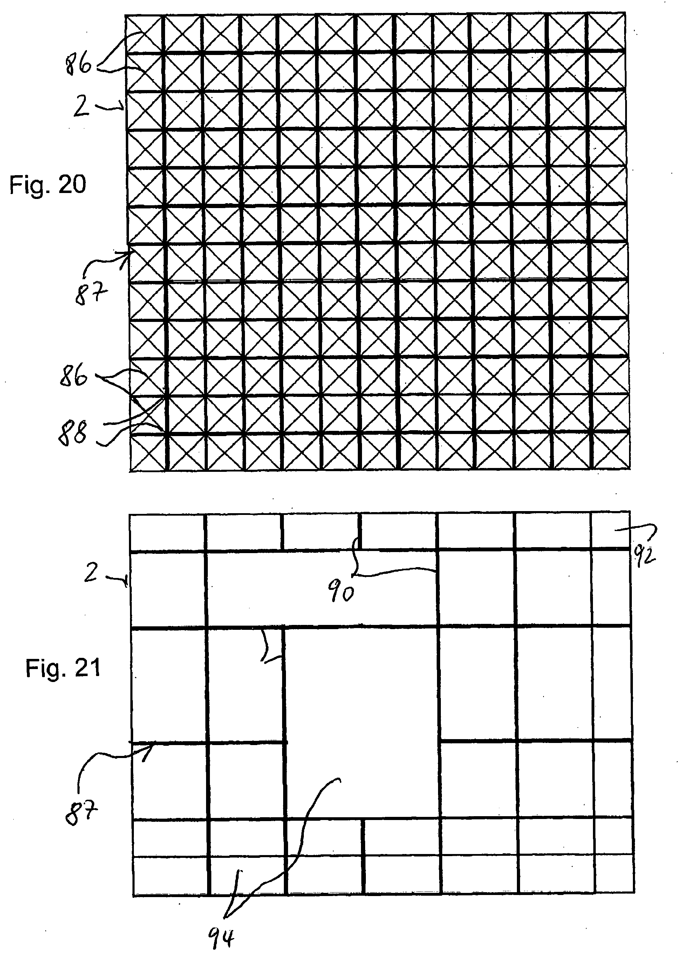

Ein Beispiel einer solchen Struktur in Draufsicht zeigt Fig. 20. Zu erkennen ist die behälterinnenseitige Oberfläche des ersten Seitenwandelementes 2 oder genauer einer von einer behälterinnenseitig liegenden, vorzugsweise aus Schaumstoff oder dgl. Kunststoff bestehenden Schicht des ersten Seitenwandelementes 2, die ein Fördergutlagefixierelement 87 bildet. Es handelt sich bei dem Fördergutlagefxierelement 87 um einen sog. Noppenschaumstoff mit pyramidenförmigen Erhebungen 86 und dazwischen liegenden Senken oder Vertiefungen 88. Die Senken 88 erlauben die schonende Aufnahme von darin passenden Fördergut-Kleinteilen, die darin gut gegen Verrutschen gesichert werden können, auch wenn der betreffende Fördergutbehälter 1 aus seiner im Wesentlichen horizontalen Beladeposition in die vertikale Transportstellung überführt und in einer Hängefördereinrichtung bewegt wird. Größere Fördergutgegenstände werden von dem Noppenschaumstoff als Andruckelement schonend gegen die entgegengesetzte Behälterinnenseite des zweiten Seitenwandelementes 6 gedrückt und werden auf diese Weise ebenfalls am Verrutschen innerhalb des Fördergutbehälters gehindert.

Selbstverständlich kommen auch andere Höhen-Tiefen-Strukturen als die in Fig. 20 gezeigte Struktur als Oberflächenstruktur der Innenseite der Seitenwandelemente 2 oder/und 6 in Frage.

Fig. 21 illustriert einen weiteren Aspekt der vorliegenden Erfindung. Gezeigt ist in Draufsicht eine behälterinnenseitige Fächerstruktur eines ersten oder zweiten Seitenwandelementes 2, 6 eines Fördergutbehälters 1 nach der Erfindung, wobei diese Fächerstruktur ähnlich einer Setzkastenfächerstruktur ausgebildet ist. Die Fachtrennwände 90 können starr von der Rückwand 92 nach innen abstehende Begrenzungen sein. Alternativ können die Fächerbegrenzungswände 90 jedoch aus einem elastisch nachgiebigen Material gebildet sein. Die unterschiedlich großen Fächer 94 erlauben die Aufnahme unterschiedlich großer Fördergutgegenstände, die darin allenfalls innerhalb ihres Fachs verrutschen können, wenn der Fördergutbehälter 1 geschlossen ist. Die Fächerstruktur stellt somit ebenfalls ein Fördergutlagefixierelement 87 dar, welches an dem ersten Seitenwand- oder/und an dem zweiten Seitenwandelement 2, 6 vorgesehen sein kann. Die Gegenflächen des jeweils anderen Seitenwandelementes sind so beschaffen, dass sie die Fächerstruktur im Schließzustand des Fördergutbehälters überdecken.

## Patentansprüche

1. Hängetasche (1) als Fördergutbehälter zum Transport von Fördergut in einer Hängefördereinrichtung,
mit einer ersten Taschenseitenwand (2) und einer zweiten Taschenseitenwand (6), die einander gegenüberliegend einen Fördergutaufnahmebereich (60) zwischen sich begrenzen und in einem Klappverbindungsbereich (62) so miteinander verbunden sind, dass sie zum Öffnen und Schließen des Fördergutaufnahmebereiches (60) auseinanderklappbar und zusammenklappbar sind, und mit einem Anhängmittel (9) zum Anhängen der Hängetasche (1) in einer Transportstellung mit oben liegender Taschenöffnung an eine Hängefördereinrichtung, wobei die erste Taschenseitenwand (2) zumindest einen starren Randkonturbereich aufweist und daran schwenkbeweglich um eine in der Transportstellung der Hängetasche (1) zumindest annähernd horizontal verlaufende Schwenkachse (15) mit dem Anhängmittel (9) verbunden ist, **dadurch gekennzeichnet, dass** die zweite Taschenseitenwand (6) an einer von der Schwenkachse (15) und dem Klappverbindungsbereich entfernten Stelle mit dem Anhängmittel (9) verbunden oder davon beaufschlagbar ist, derart, dass durch Schwenken der ersten Taschenseitenwand (2) um die Schwenkachse (15) die Taschenseitenwände (2, 6) auseinanderklappbar und zusammenklappbar sind.

2. Hängetasche nach Anspruch 1, **dadurch gekennzeichnet, dass** die erste Taschenseitenwand (2) ein Tablett mit einer Tablettebene (3) umfasst und an dem Tablett schwenkbeweglich mit dem Anhängmittel (9) verbunden ist, wobei die Schwenkachse (15) in der Tablettebene (3) oder in einer sich parallel dazu erstreckenden Ebene verläuft.

3. Hängetasche nach Anspruch 2, **dadurch gekennzeichnet, dass** das Tablett formstabil ist und dass die zweite Taschenseitenwand (6) einen dem Tablett der ersten Taschenseitenwand (2) gegenüberliegenden, zumindest begrenzt formnachgiebigen Wandbereich aufweist.

4. Hängetasche nach Anspruch 3, **dadurch gekennzeichnet, dass** der formnachgiebige Wandbereich aus einem formschlaffen Material, insbesondere Textil, oder/und aus einem elastisch nachgiebigen Material, vorzugsweise aus Kunststoff, ausgebildet ist.

5. Hängetasche nach einem der vorhergehenden Ansprüche, **dadurch gekennzeichnet, dass** die erste Taschenseitenwand (2) oder/und die zweite Taschenseitenwand (6) ein Fördergutlagefixierelement (87) zur Lagefixierung von Fördergut in dem Fördergutaufnahmebereich (60) umfasst oder als solches ausgebildet ist.

6. Hängetasche nach Anspruch 5, **dadurch gekennzeichnet, dass** das Fördergutlagefixierelement (87) ein elastisch nachgiebiges Andruckelement umfasst, welches dazu bestimmt und eingerichtet ist, bei geschlossener und mit Fördergut beladener Hängetasche (1) einen elastischen Haltedruck auf das Fördergut auszuüben.

7. Hängetasche nach Anspruch 5 oder 6, **dadurch gekennzeichnet, dass** das Fördergutlagefixierelement (87) eine über die erste Taschenseitenwand (2) oder/und die zweite Taschenseitenwand (6) verteilte Fächerstruktur mit Vertiefungen zur Aufnahme von Fördergutgegenständen aufweist.

8. Hängetasche nach einem der Ansprüche 5 bis 7, **dadurch gekennzeichnet, dass** das Fördergutlagefixierelement (87) innenseitig der Hängetasche (1) eine Struktur aus Erhebungen und Senken, vorzugsweise eine Noppenstruktur aufweist.

9. Hängetasche nach einem der vorhergehenden Ansprüche, **dadurch gekennzeichnet, dass** das Anhängmittel (9) als bügelförmiger Rahmen ausgebildet ist mit zwei Bügelschenkeln (14), die die erste Taschenseitenwand (2) zwischen sich aufnehmen und an denen das Anhängmittel (9) mit der ersten Taschenseitenwand (2) um die Schwenkachse (15) schwenkbar verbunden ist.

10. Hängetasche nach Anspruch 9, **dadurch gekennzeichnet, dass** die zweite Taschenseitenwand (6) an ihrem von dem Klappverbindungsbereich (62) entfernten Ende (bei 10) mit einem zwischen den Bügelschenkeln (14) vorgesehenen Mittenabschnitt (12) des bügelförmigen Rahmens (9) verbunden ist.

11. Hängetasche nach einem der vorhergehenden Ansprüche, **dadurch gekennzeichnet, dass** die erste Taschenseitenwand (2) und die zweite Taschenseitenwand (6) eine maulartige Öffnung (64) bilden, die im Klappverbindungsbereich (62) in ein ansonsten umseitig umschlossenes Taschenfach (66) einmündet.

12. Hängetasche nach einem der vorhergehenden Ansprüche, **gekennzeichnet durch** eine Positionsarretiereinrichtung (30, 40, 50), mittels welcher das Anhängmittel (9) und die erste Taschenseitenwand (2) bezüglich des Schwenkens um die Schwenkachse (15) zueinander reversibel arretierbar sind.

13. Hängetasche nach Anspruch 12, **dadurch gekennzeichnet, dass** die Positionsarretiereinrichtung (30, 40, 50) dazu eingerichtet ist, die Arretierung zwischen der ersten Taschenseitenwand (2) und dem Anhängmittel (9) zu lösen, wenn die Hängetasche (1) in ihrer Transportstellung auf einem Untergrund aufgestellt wird.

14. Hängefördereinrichtung (2) mit wenigstens einer Hängetasche nach einem der vorhergehenden Ansprüche und einer Führungsschienenanordnung (19), an der die Hängetasche (1) in ihrer Transport- und Schließstellung geführt bewegbar ist, wobei die Hängetasche (1) unter Verbleib an der Führungsschienenanordnung (19), aus der Transport-und Schließstellung heraus zu öffnen ist, wobei beim Auseinanderklappen der Taschenseitenwände (2, 6) die erste Taschenseitenwand (2) um die Schwenkachse (15) herum in eine zumindest annähernd horizontale Beladeposition unterhalb der zweiten Taschenseitenwand (6) verschwenkbar ist.

15. Hängefördereinrichtung nach Anspruch 14, **dadurch gekennzeichnet, dass** die erste Taschenseitenwandwand (2) über die horizontale Beladeposition hinaus in eine Entladeposition verschwenkbar ist, in der die erste Taschenseitenwand (2) mit ihrem dem Klappverbindungsbereich (62) entfernt gegenüberliegenden Ende zuunterst nach unten geneigt ist, um darauf liegendes Fördergut bei geöffneter Hängetasche (1) aus der Hängetasche (1) herausrutschen zu lassen.

## Claims

1. Suspended pocket (1) as a conveyed goods container for transporting conveyed goods in a suspended conveyor device, comprising a first pocket side wall (2) and a second pocket side wall (6), which delimit, opposite one another, a conveyed goods receiving region (60) therebetween and are interconnected in a hinge connection region (62) such that they can be unfolded and folded up to open and close the conveyed goods receiving region (60), and comprising a suspension means (9) for suspending the suspended pocket (1) in a transport position, in which the pocket opening is at the top, on a suspended conveyor device,
the first pocket side wall (2) having at least one rigid edge contour region and being connected to the suspension means (9) at said region so as to be pivotable about a pivot axis (15) that extends at least approximately horizontally when the suspended pocket (1) is in the transport position,
**characterised in that** the second pocket side wall (6) is connected to or can be acted upon by the suspension means (9) at a point that is remote from the pivot axis (15) and the hinge connection region, such that, by pivoting the first pocket side wall (2) about the pivot axis (15), the pocket side walls (2, 6) can be unfolded and folded up.

2. Suspended pocket according to claim 1, **characterised in that** the first pocket side wall (2) comprises a tray having a tray plane (3) and is pivotally connected to the tray by means of the suspension means (9), the pivot axis (15) extending in the tray plane (3) or in a plane that extends in parallel therewith.

3. Suspended pocket according to claim 2, **characterised in that** the tray is dimensionally stable and **in that** the second pocket side wall (6) comprises a wall region which faces the tray of the first pocket side wall (2) and is dimensionally flexible at least to a limited extent.

4. Suspended pocket according to claim 3, **characterised in that** the dimensionally flexible wall region is formed of a dimensionally slack material, in particular fabric, or/and of a resiliently flexible material, preferably of plastics material.

5. Suspended pocket according to any of the preceding claims, **characterised in that** the first pocket side wall (2) or/and the second pocket side wall (6) either comprises or is designed as a conveyed goods position-securing element (87) for securing the position of conveyed goods in the conveyed goods receiving region (60).

6. Suspended pocket according to claim 5, **characterised in that** the conveyed goods position-securing element (87) comprises a resiliently flexible pressure element which is intended and designed to exert a resilient holding pressure on the conveyed goods when the suspended pocket is closed and loaded with conveyed goods.

7. Suspended pocket according to either claim 5 or claim 6, **characterised in that** the conveyed goods position-securing element (87) has a fan structure which comprises recesses for receiving conveyed goods items and is spread across the first pocket side wall (2) or/and the second pocket side wall (6).

8. Suspended pocket according to any of claims 5 to 7, **characterised in that** the conveyed goods position-securing element (87) has a structure consisting of elevations and depressions, preferably a pimpled structure, inside the suspended pocket (1).

9. Suspended pocket according to any of the preceding claims, **characterised in that** the suspension means (9) is formed as a bracket-shaped frame having two bracket legs (14) which receive the first pocket side wall (2) therebetween and at which the suspension means (9) is connected to the first pocket side wall (2) so as to be pivotable about the pivot axis (15).

10. Suspended pocket according to claim 9, **characterised in that** the second pocket side wall (6) is connected, at its end (at 10) remote from the hinge connection region (62), to a central portion (12) of the bracket-shaped frame (9) provided between the bracket legs (14).

11. Suspended pocket according to any of the preceding claims, **characterised in that** the first pocket side wall (2) and the second pocket side wall (6) form a jaw-like opening (64) which opens in the hinge connection region (62) into a pocket (66) that is otherwise enclosed on all sides.

12. Suspended pocket according to any of the preceding claims, **characterised by** a position-locking device (30, 40, 50), by means of which the suspension means (9) and the first pocket side wall (2) can be reversibly locked with respect to one another relative to the pivoting about the pivot axis (15).

13. Suspended pocket according to claim 12, **characterised in that** the position-locking device (30, 40, 50) is designed to release the locking between the first pocket side wall (2) and the suspension means (9) if the suspended pocket (1) is positioned on a base when in its transport position.

14. Suspended conveyor device (2) comprising at least one suspended pocket according to any of the preceding claims and a track assembly (19), on which the suspended pocket (1) can be moved in a guided manner when in its transport and closed position, wherein the suspended pocket (1) can be opened from the transport and closed position while remaining on the track assembly (19), wherein, when unfolding the pocket side walls (2, 6), the first pocket side wall (2) can be pivoted below the second pocket side wall (6) about the pivot axis (15) into an at least approximately horizontal loading position.

15. Suspended conveyor device according to claim 14, **characterised in that** the first pocket side wall (2) can be pivoted beyond the loading position into an unloading position in which the first pocket side wall (2) is inclined downwards, with its opposite end remote from the hinge connection region (62), at the very bottom in order to make it possible for conveyed goods thereon to slide out of the suspended pocket (1) when the suspended pocket (1) is open.

## Revendications

1. Poche suspendue (1) en tant que récipient de matière convoyée pour le transport de matière convoyée dans un dispositif de convoyage suspendu,
avec une première paroi latérale de poche (2) et une deuxième paroi latérale de poche (6), qui limitent entre elles une zone de logement de matière convoyée (60) et qui sont reliées entre elles dans une zone de liaison repliable (62) de façon à ce qu'elles puissent être dépliées et repliées pour l'ouverture et la fermeture de la zone de logement de matière convoyée (60), et avec un moyen d'accrochage (9) pour l'accrochage de la poche suspendue (1) dans une position de transport avec une ouverture de poche supérieure au niveau d'un dispositif de convoyage suspendu, la première paroi latérale de poche (2) comprenant au moins une zone de contour de bord rigide et étant reliée de manière pivotante autour d'un axe de pivotement (15) s'étendant au moins approximativement horizontalement dans la position de transport de la poche suspendue (1), avec le moyen d'accrochage (9), **caractérisé en ce que** la deuxième paroi latérale de poche (6) est reliée, au niveau d'un endroit éloigné de l'axe de pivotement (15) et de la zone de liaison repliable, avec le moyen d'accrochage (9) ou peut être sollicitée par celui-ci de façon à ce que, grâce au pivotement de la première paroi latérale de poche (2) autour de l'axe de pivotement (15), les parois latérales des poches (5, 6) puissent être dépliées et repliées.

2. Poche suspendue selon la revendication 1, **caractérisée en ce que** la première paroi latérale de poche (2) comprend une tablette avec un plan de tablette (3) et est reliée au niveau de la tablette de manière pivotante avec le moyen d'accrochage (9), l'axe de pivotement (15) se trouvant dans le plan de la tablette (3) ou dans un plan s'étendant parallèlement à celui-ci.

3. Poche suspendue selon la revendication 2, **caractérisée en ce que** la tablette est rigide et **en ce que** la deuxième paroi latérale de poche (6) comprend une partie de paroi flexible de manière au moins limitée située en face de la tablette de la première paroi latérale de la poche (2).

4. Poche suspendue selon la revendication 3, **caractérisée en ce que** la partie de paroi flexible est constituée d'un matériau flasque, plus particulièrement du textile, ou/et d'un matériau flexible de manière élastique, de préférence de matière plastique.

5. Poche suspendue selon l'une des revendications précédentes, **caractérisée en ce que** la première paroi latérale de poche (2) ou/et la deuxième paroi latérale de la poche (6) comprend un élément de fixation de la position de la matière convoyée (87) pour la fixation de la position de la matière convoyée dans la zone de logement de matière convoyée (60) ou est conçue comme tel.

6. Poche suspendue selon la revendication 5, **caractérisée en ce que** l'élément de fixation de la position de la matière convoyée (87) comprend un élément de compression flexible de manière élastique qui est conçu et configuré pour exercer, lorsque la poche suspendue (1) est fermée et chargée de matière convoyée, une pression de maintien sur la matière convoyée.

7. Poche suspendue selon la revendication 5 ou 6, **caractérisée en ce que** l'élément de fixation de position de la matière convoyée (87) comprend une structure en compartiments répartie sur la première paroi latérale de poche (2) ou/et sur la deuxième paroi latérale de poche (6) avec des creux pour le logement d'objets convoyés.

8. Poche suspendue selon l'une des revendications 5 à 7, **caractérisée en ce que** l'élément de fixation de position de la matière convoyée (87) comprend, à l'intérieur de la poche suspendue (1) une structure constituée de saillies et de creux, de préférence une structure à boucles.

9. Poche suspendue selon l'une des revendications précédentes, **caractérisée en ce que** le moyen d'accrochage (9) est conçu comme un cadre en forme d'étrier avec deux montants d'étriers (14) qui logent la première paroi latérale de poche (2) entre elles et, au niveau de ceux-ci, le moyen d'accrochage (9) est relié de manière pivotante autour de l'axe de pivotement (15) avec la première paroi latérale de poche (2).

10. Poche suspendue selon la revendication 9, **caractérisée en ce que** la deuxième paroi latérale de poche (6) est reliée, au niveau de son extrémité (vers 10) éloignée de la zone de liaison repliable (62), avec une portion centrale (12) du cadre en forme d'étrier (9), prévue entre les montants de l'étrier (14).

11. Poche suspendue selon l'une des revendications précédentes, **caractérisée en ce que** la première paroi latérale de poche (2) et la deuxième paroi latérale de poche (6) forment une ouverture en forme de gueule (64) qui débouche, dans la zone de liaison repliable (62), dans un compartiment de poche (66), entouré sinon au verso.

12. Poche suspendue selon l'une des revendications précédentes, **caractérisée par** un dispositif de blocage de position (30, 40, 50), au moyen duquel le moyen d'accrochage (9) et la première paroi latérale de poche (2) peuvent être bloqués de manière réversible entre eux en ce qui concerne le pivotement autour de l'axe de pivotement (15).

13. Poche suspendue selon la revendication 12, **caractérisée en ce que** le dispositif de blocage de position (30, 40, 50) est conçu pour défaire le blocage entre la première paroi latérale de poche (2) et le moyen d'accrochage (9) lorsque la poche suspendue (1) est posée dans sa position de transport sur un sol.

14. Dispositif de convoyage suspendu (2) avec au moins une poche suspendue selon l'une des revendications précédentes et un dispositif de rail de guidage (19), au niveau duquel la poche suspendue (1) peut être déplacée de manière guidée dans sa position de transport et de fermeture, la poche suspendue (1), en restant sur le dispositif de rail de guidage (19), pouvant être ouvert hors de la position de transport et de fermeture, la première paroi latérale de poche (2) pouvant pivoter autour de l'axe de pivotement (15) dans une position de chargement au moins approximativement horizontale en dessous de la deuxième paroi latérale de poche (6) lors du dépliage des parois latérales de poches (2, 6).

15. Dispositif de convoyage suspendu selon la revendication 14, **caractérisée en ce que** la première paroi latérale de poche (2) peut être pivotée au-delà de la position de chargement horizontale vers une position de déchargement, dans laquelle la première paroi latérale de poche (2) est inclinée vers le bas avec son extrémité opposée éloignée de la zone de liaison repliable (62) afin de laisser glisser la matière convoyée qui se trouve dessus hors de la poche suspendue (1) lorsque la poche suspendue (1) est ouverte.
